# EUROPEAN PATENT SPECIFICATION

(11) **EP 2 730 083 B1**
(45) Date of publication and mention of the grant of the patent: **16.09.2015**
(21) Application number: 12737971.7
(22) Date of filing: 06.07.2012
(51) Int. Cl.: G06Q 20/32, G09F 27/00, G08G 1/0962, G08G 1/00, G09F 21/04, G06Q 30/02, H04M 3/487

(54) **METHODS AND SYSTEMS FOR DISPLAYING GEO-BASED OFFERS ON A MOBILE ADVERTISING DISPLAY DEVICE**
VERFAHREN UND SYSTEME ZUR ANZEIGE GEOBASIERTER ANGEBOTE AUF EINER MOBILEN WERBEANZEIGEVORRICHTUNG
PROCÉDÉS ET SYSTÈMES POUR L'AFFICHAGE D'OFFRES BASÉES SUR LA POSITION GÉOGRAPHIQUE POUR UN DISPOSITIF MOBILE D'AFFICHAGE PUBLICITAIRE

(30) Priority: 08.07.2011 US 201161505633 P; 05.07.2012 US 201213542032
(43) Date of publication of application: 14.05.2014
(73) Proprietor: Qualcomm Incorporated, San Diego, CA 92121 (US)
(72) Inventor: ALTMAN, Steven Russell, San Diego, California 92121 (US); DESSERT, Robert, Atlanta, Georgia 30305 (US)
(74) Representative: Dunlop, Hugh Christopher
(86) International application number: PCT/US2012/045712
(87) International publication number: WO 2013/009603

(56) References cited:
- WO-A1-2006/069445
- WO-A2-01/45065
- US-A- 6 060 993
- US-A1- 2001 052 841
- US-B1- 6 545 596
- US-B1- 6 553 313

## Description

### BACKGROUND

Advertising has long been recognized as a key part of business development. Sponsors rely on advertising to communicate with their consumers. Advertising has also proven valuable for conveying non-business information, such as political, ideological, or public safety messages.

Advertising has continually expanded through various traditional and new media. Just about any medium can be used for advertising. However, once an ad is placed on physical media, such as billboards, it typically remains static. Some physical advertising media have been created that may rotate through several ads, but these media still require preliminary setup or programming. There is a need for advertising methods and media that allow sponsors to continually update their messages and communicate with consumers regarding matters of interest to them in the current moment or location.

Many advertising media are mobile. For example, taxis and buses often have advertising billboards affixed to them. Despite the potential versatility of mobile media, these ads remain the same regardless of where the vehicle travels. While some mobile media changes, only location information is considered, such as disclosed in U.S. patent No. 6,545,596 to Moon. There is also a need for systems that can automatically update advertising messages based on an environment.

### SUMMARY

The invention is defined by the independent claims.

The various aspects include methods for displaying advertisements on a mobile advertising display device, including receiving advertisements and a table associating particular advertisements with positions and times, determining the current position and time of the advertising display, selecting an advertisement based on the current position, time, and their association in the table, and displaying the selected advertisement on a mobile display. Further aspects may include transmitting the current position of the advertising display to an advertising server, receiving advertisements from the server, displaying a received advertisement if an advertisement was received, displaying an advertisement according to received instruction if an instruction was received, or displaying a default advertisement if neither an advertisement nor an instruction were received.

Further aspects methods may include selecting advertisements to display on a mobile advertising display device by receiving a plurality of advertisements, associating each of the plurality of advertisements with a position or time, receiving a position from the mobile advertising display device, selecting an advertisement from the plurality of advertisements based on the received position and current time, determining if the selected advertisement is stored on the mobile advertising display device, transmitting the selected advertisement if the selected advertisement is not stored on the mobile advertising display device, and transmitting an instruction to display the selected advertisement if the selected advertisement is stored on the mobile advertising display device.

Various aspects include mobile advertising display devices and servers including processors configured to perform operations of the aspect methods described above. Various aspects also include mobile advertising display devices and servers including means for performing functions of the aspect methods described above. Various aspects also include non-transitory processor- and server-readable storage media having stored thereon processor-executable instructions configured to cause a processor to perform operations of the aspect methods described above.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1 is a system diagram of a communication network suitable for use with various aspects.
FIGS. 2A and 2B are diagrams of sample geographic regions for use in various aspects.
FIG. 3A is a sample table associating advertisements with times and geographic zones.
FIG. 3B a chart showing advertisements for a sample path across various zones and times.
FIG. 4 is a process flow diagram of an aspect method for displaying an advertisement on a mobile advertisement display device (MADD) based on geography.
FIG. 5A is a process flow diagram of an aspect method for displaying an advertisement on a MADD based on geography and user data received from mobile devices.
FIG. 5B is a user perspective view of a mobile device connecting with a MADD.
FIG. 6A is a process flow diagram of an aspect method that may be implemented in a MADD for displaying an advertisement on the MADD based on geography.
FIG. 6B is a process flow diagram of an aspect method that may be implemented in a server for displaying an advertisement on the MADD based on geography.
FIG. 7A is a process flow diagram of an aspect method that may be implemented in a MADD for displaying an advertisement on the MADD based on geography and user data received from mobile devices.
FIG. 7B is a process flow diagram of an aspect method that may be implemented in a server for displaying an advertisement on a MADD based on geography and user data received from mobile devices.
FIG. 7C is a process flow diagram of an aspect method that may be implemented in a server for displaying an advertisement on a MADD based on geography and user data received from mobile devices and for responding to user requests.
FIG. 7D is a perspective view of a mobile device with a list of options provided in response to a user request.
FIG. 7E is a perspective view of a mobile device with a coupon provided in response to a user request.
FIG. 8 is process flow diagram of an aspect method for displaying new or updated messages on a MADD.
FIG. 9A is a process flow diagram of an aspect method that may be implemented in a MADD for displaying an advertisement on a MADD based on geography and generating a first invoice.
FIG. 9B is a process flow diagram of an aspect method that may be implemented in a server for displaying an advertisement on a MADD based on geography and generating a first invoice.
FIG. 10A is a process flow diagram of an aspect method that may be implemented in a MADD for displaying an advertisement on a MADD based on geography and generating first and second invoices.
FIG. 10B is a process flow diagram of an aspect method that may be implemented in a server for displaying an advertisement on a MADD based on geography and generating first and second invoices.
FIG. 11A is a process flow diagram of an aspect method that may be implemented in a MADD for displaying an advertisement on a MADD based on geography and generating first, second, and third invoices.
FIG. 11B is a process flow diagram of an aspect method that may be implemented in a server for displaying an advertisement on a MADD based on geography and generating first, second, and third invoices.
FIG. 12 is a process flow diagram of an aspect method for displaying an advertisement on a MADD based on geography and generating first, second, third, and fourth invoices.
FIG. 13 is a process flow diagram of an aspect method for distributing mobile advertisements for display on MADDs.
FIG. 14 is process flow diagram of an aspect method for tracking MADDs.
FIG. 15 is a communication system diagram illustrating a multi-vehicle mobile advertising implementation according to an aspect.
FIG. 16 is a process flow diagram of an aspect method for deploying multi-vehicle display advertising.
FIG. 17 is a perspective view of a computing device suitable for use as a server in various aspects.
FIG. 18 is a component block diagram of a MADD.
FIG. 19 is a system diagram of a taxicab equipped with a MADD.

### DETAILED DESCRIPTION

The various aspects will be described in detail with reference to the accompanying drawings. Wherever possible, the same reference numbers will be used throughout the drawings to refer to the same or like parts. References made to particular examples and implementations are for illustrative purposes only.

The word "exemplary" is used herein to mean "serving as an example, instance, or illustration." Any implementation described herein as "exemplary" is not necessarily to be construed as preferred or advantageous over other implementations.

As used herein, the terms "computing device" and "mobile device" refer to a variety of computer devices, including but not limited to cellular telephones, personal television devices, personal data assistants (PDAs), palm-top computers, wireless electronic mail receivers (e.g., the Blackberry® and Treo® devices), multimedia Internet enabled cellular telephones (e.g., the Blackberry Storm®), Global Positioning System (GPS) receivers, wireless gaming controllers, receivers within vehicles (e.g., automobiles), interactive game devices, notebooks, smartbooks, netbooks, tablets (e.g., Apple®, iPad®, Samsung®, Galaxy®), mobile television devices, wireless modem dongles, computers (e.g., laptop computers) coupled to a wireless modem, computers coupled to a dongle, or other portable programmable computing devices.

An overview, the various aspects leverage the flexibility of an electronic display that is controlled by a computing device so that the electronic display can present any form of display advertisements stored in or transmitted to the computing device. Further, location sensors (e.g., GPS) and the connectivity of wireless communication networks enable delivery of relevant display advertisements to consumers more effectively than conventional billboards.

Various aspects disclosed herein enable providing advertisements on a mobile advertisement display device (MADD) in a manner that delivers the advertisements to relevant consumers based on time and geography, as well as other information. A MADD is a device that includes an electronic display for generating a substantially large size image under the control of the computing device that can present a wide variety of advertising images on the display. The display may be made mobile by packaging the display components and computing device in a form that can be attached to a motor vehicle, such as a bus, train, subway, taxicab, etc. The advertisements may be selected for display based on one or more of the MADD's geographic location, the time of day, or various types of user data from surrounding mobile devices. By varying the advertisements displayed based on location and time, businesses can precisely target customers who are likely to view the advertisements. For example, businesses may sponsor ads to be presented at several times and places which are tailored to appeal to particular markets or consumers. Further aspects include systems and methods of responding to requests for information or coupons from mobile device users who may be within a signaling range of the MADD. Further aspects include systems and methods for allocating advertising revenues based on display conditions and mobile device user activities.

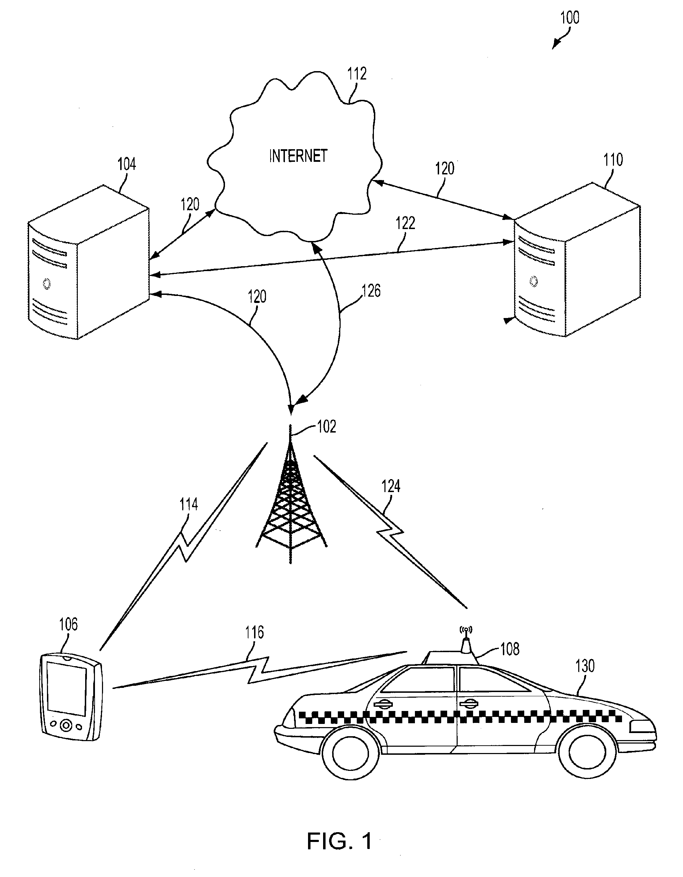

FIG. 1 illustrates an exemplary advertising communication system 100 that may be used in conjunction with a MADD. The advertising communication system 100 may make use of a wireless communication system 102, such as a cellular telephone network, Wi-Fi network, or combinations of both cellular and Wi-Fi networks. The wireless communication system 102 may be coupled to the Internet 112, such as via an Internet gateway connection 126. One or more advertising servers 104 may be coupled to the wireless communication system 102 by a local area network 120 or the Internet 112. While FIG. 1 shows the network connections 120 as physical connections, wireless network connections may also be used. The wireless communication system 102 may provide wireless communication services (e.g., cellular data networks or Wi-Fi) to a plurality of mobile devices 106 through wireless data links 114. The wireless communication system 102 may also provide wireless communication services to a plurality of mobile advertising display devices MADDs 108 through wireless data links 124. As illustrated in FIG. 1, a MADD 108 may be attached to a vehicle 130, such as a bus, taxicab or truck so that the advertisement is mobile. A MADD 108 may also include local area transceivers for establishing communication links with mobile devices 106 through separate wireless data links 116, such as a Bluetooth connection or a wireless LAN (e.g., Wi-Fi, FlashLinq, etc.) connection.

The advertising communication system 100 may also include a plurality of advertisement sponsor servers 110. A sponsor server 110 may correspond to one or more merchants or other business or governmental entities sponsoring advertisements. Sponsor servers 110 may be connected to the wireless communication system 102 via the Internet 112. Sponsor servers 110 may be connected with the advertising server(s) 104, such as through local area network 122 or via the Internet 112. Advertising servers 104 and sponsor servers 110 may be connected to the Internet 112 through standard Internet connections 120.

A MADD 108 may communicate any of a variety of electronic displays capable of presenting a variety of graphical advertisements. A MADD 108 may be coupled with a vehicle 130 (e.g., a taxicab) so that the MADD 108 travels throughout the day. As described more fully below, a MADD 108 may be equipped with a position sensor, such as a GPS sensor, such that the system is aware of its current location, as well as its time of day. Using information from such sensors, an advertisement for display may be selected based on the current location of the MADD 108 and/or the time of day. As the MADD 108 travels to new locations, the display of the MADD 108 may change to present an advertisement more suited for consumers in the current location. The suitability of an advertisement may be based on a variety of factors, such as businesses within the vicinity of the MADD, demographics of consumers likely to view the advertisement, etc. For example, a MADD 108 may be positioned on top of a taxi 130. As the taxicab 130 drives throughout the city, the advertisement displayed on the MADD 108 may change to appeal to consumers in particular neighborhoods (e.g., businesspeople in the banking district, and gamblers in the casino district) and to advertise local businesses, such as establishments within walking distance of the current MADD location.

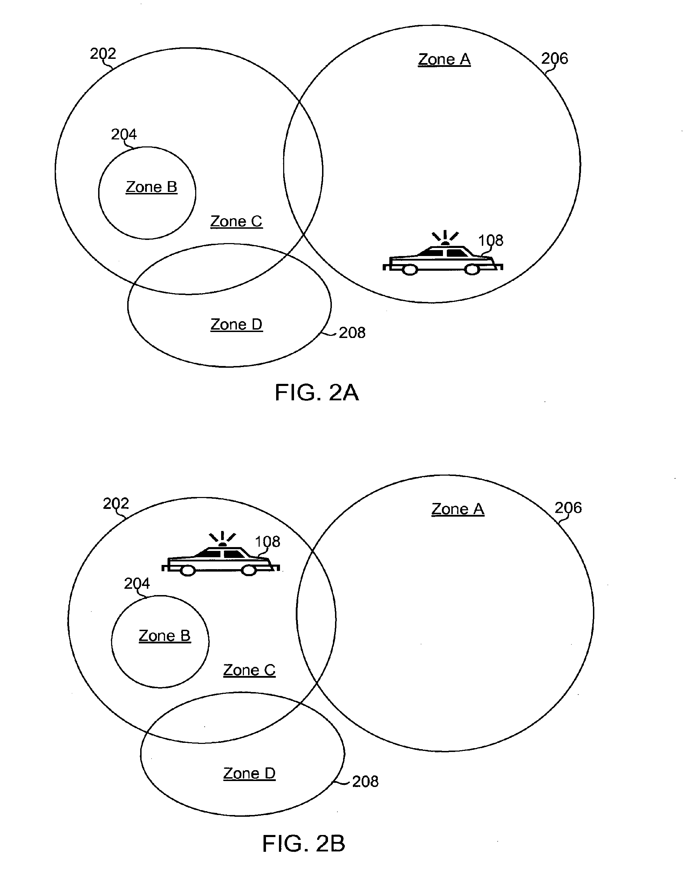

To illustrate the concept of geo-location-based advertising that may be implemented with the various aspects described herein, a city may be of divided into several advertising zones, such as zones A 206, B 204, C 202, and D 208, as illustrated in FIG. 2A. Each advertising zone may be associated with one or more advertisements that are to be preferentially displayed while the MADD is within that zone. Thus, when a MADD 108 determines that it is in a particular zone, it may recall from memory the advertisement associated with that zone and presented on the electronic display. For example, FIG. 2A illustrates an instance in which the MADD 108 is located in Zone A 206. Therefore, the MADD 108 may display an advertisement associated with Zone A 206. When the vehicle carrying the MADD 108 the moves to another region, for example, into Zone C 202 as illustrated in FIG. 2B, the advertisement presented on the display will change to an advertisement associated with Zone C 202.

Advertising regions or zones may be established and vary in size in manner that is appropriate for the objectives and strategies of the business purchasing advertisements presented on the MADD 108. Within a dense city, a zone may be very small, such as a single block or portion of a block. This may be particularly appropriate when an advertiser is a restaurant having a local customer base (e.g., a deli or coffee shop), in which case the advertiser may only pay for advertisements when a consumer viewing the ad is able to visit the establishment, such as by walking a short distance. Some advertisers may have a larger zone of interest, such as multiple blocks or a neighborhood. Other advertisers may have regional advertising strategies for which a single advertisement may be appropriate within large regions, such as advertisements for products or businesses which are not limited to particular locations (e.g., airlines, consumer products, insurance, etc.). Also, if the MADD 108 is located on a vehicle that transits long distances, the appropriate advertising zones may be the size of counties or states.

As illustrated in FIG. 2A and 2B, advertising zones may overlap. For example, the figures show Zone A 206 and Zone C 202 overlapping. Various rules may be implemented within the MADD computing device (or other portions of the advertising communication system 100) to select the appropriate advertisement for display when a MADD 108 is within such an overlap region. A MADD 108 may select an advertisement for display within a current zone based upon priority assigned to the various advertisements and/or advertising zones. This priority may be assigned for advertisements, zones, time of day and combinations thereof. For example, one advertising zone may have permanent priority over an adjacent advertising zone, or one advertising zone among the overlapping advertising zones may be chosen at random for defining the advertisement for display each time the MADD 108 enters an overlap region. As another example, a rule may be set such that a MADD 108 displaying an advertisement appropriate for a first zone may not change the advertisement upon entering an area of overlap until the vehicle leaves the overlap region and enters the second zone. This example rule enables vehicles that remain within a first zone to continuously display the same advertisement even when they drive through an overlap region. Various other rules may be implemented for overlap zones, such as the smaller region having permanent priority or priority only at specified times.

In some cases, one advertising zone may be enclosed entirely within another advertising zone, such as illustrated in FIG. 2A that shows Zone B 204 located inside Zone C 202. In such situations, the enclosed advertising cell may have priority over the larger zone. A good example of this is an advertising zone surrounding a deli or coffee shop in which the advertisement is displayed only when the advertisement will be viewed by consumers within walking distance of the establishment. When the vehicle carrying the MADD 108 is beyond the radius of the deli or coffee shop, an advertisement associated with the local neighborhood may be appropriate.

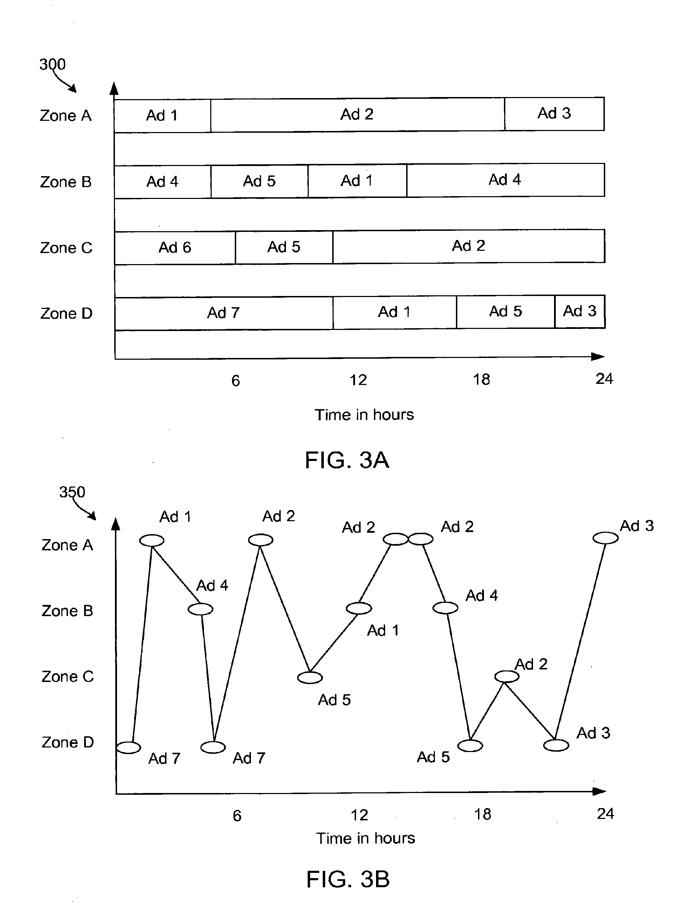

In a further aspect, advertisements selected for presentation on the MADD 108 may depend upon the current time, so that a variety of advertisements are presented based upon the time of day. Time of day advertising selection may be combined with advertising zone (i.e., geo-based selection), so the particular advertisement displayed can be narrowly tailored to consumer interests based on their location and current time. FIG. 3A illustrates how a plurality of different advertisements may be assigned to various advertising zones and times of day. Table 300 shows an example in which one of seven different advertisements may be displayed in each of four advertising zones (i.e., zones A-D) throughout a 24 hour cycle, based on the time of day. For example, a MADD 108 located in Zone A at 4 o'clock in the morning may select Ad 1 for display, while at six o'clock in the morning, a MADD 108 located in Zone D would display Ad 7. If the MADD 108 returns to Zone A at noon, it may select Ad 2 for display. If the MADD 108 remains within a given advertising zone for an extended period time, its displayed advertisement may change with the time of day as specified by the advertisers. As illustrated in FIG. 3A, the time used may be the appropriate time where the MADD 108 is located. While a table 300 only shows a single advertisements for any given time in each advertising zone, a plurality of ads may be assigned to each advertising zone and time of day, so that multiple advertisements may be presented side-by-side or in succession as may be desired by the advertisers.

FIG. 3A illustrates an example data structure that may be implemented in the various aspects to communicate to each MADD 108 advertising selection criteria to be used by the computing device, so advertisements selected for display can be controlled in advance by advertisers without continuous communications with the MADD 108. Once the plurality of advertisements and the advertising selection criteria table 300 have been downloaded to memory in the MADD 108, the MADD computing device 108 will make the appropriate advertising selections based upon its current location and time. This data structure also illustrates how a complex geo-based advertising strategy can be implemented in a straightforward manner. The numbers of different advertisements, advertising zones, and advertising time slots throughout the day can be quite extensive. The only real limit on the degree to which different advertisements can be presented in different locations and time slots may be the memory of the MADD 108 computing device. Table 300 is merely one example of the data structure suitable for the various aspects, and one of skill in the art would appreciate that a variety of known data structures may also be used for accomplishing substantially similar functions.

When a MADD vehicle moves through a plurality of advertising zones presenting a variety of advertisements based upon different times of day, the advertisements that are presented on the display may change frequently. FIG. 3B illustrates an example of a sequence of advertisements displayed by a moving MADD 108, such as a taxicab, implementing the advertising selection table 300 illustrated in the graph 350 shown in FIG. 3A. Graph 350 shows an example sequence of ads that will be presented as a MADD 108 travels among advertising zones A-D over time while selecting advertisements based on the location and time criteria listed in table 300 of FIG. 3A.

The length of time that an advertisement is displayed may be a predetermined or may vary based on how long a MADD 108 is in a particular zone. For example, graph 350 shows the MADD 108 displaying Ad 2 twice. This scenario may be because the MADD 108 was in Zone A for a long time. Alternatively, the second occurrence of Ad 2 may be a new or revised advertisement. Several aspect methods for updating a MADD 108 to display new or revised advertisements are discussed below.

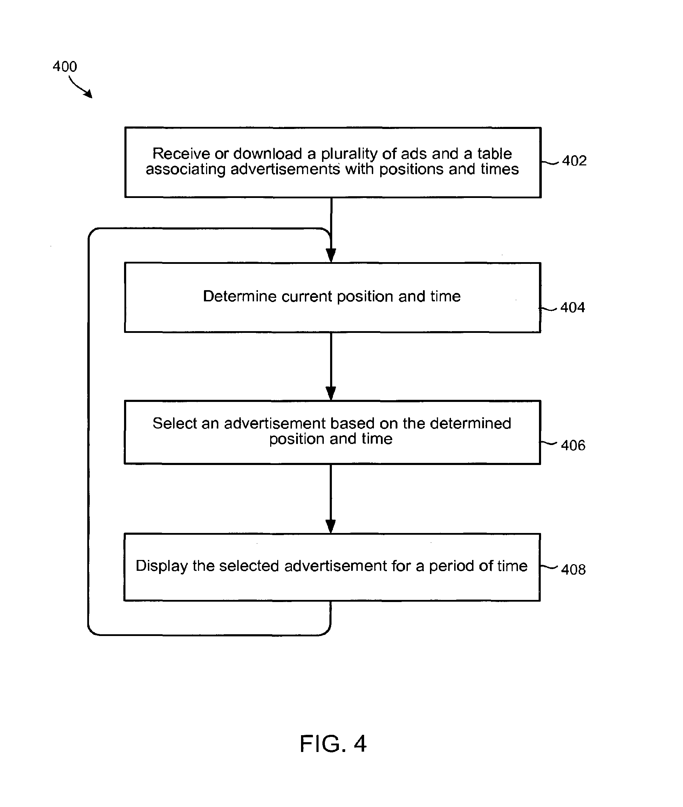

FIG. 4 illustrates an aspect method 400 for displaying advertisements on the MADD 108. In method 400 at block 402, the MADD 108 may receive or download a plurality of advertisements along with a table (or other data structure) associating the received advertisements with positions and times. The advertisements may be downloaded and stored in any graphical form readable by a computing device including images (e.g., TIF, JPEG, PDF, etc.), text files, and executable files (e.g., HTML code, JavaScript®, etc.) The advertising selection criteria table may be similar to the table shown in FIG. 3 or may be any of a variety of other types of data structures. The MADD 108 may receive the advertisements and selection criteria table through a wireless connection, such as wireless data link 124 illustrated in FIG. 1. Additionally or alternatively, the MADD 108 may receive the advertisements and/or advertisement selection criteria table from a wired network connection (e.g., a USB connection to a computer) or from physical media, such as a USB FLASH drive plugged into the MADD computing device, a CD-ROM, DVD or Blu-ray disk loaded into a suitable drive coupled to the computing device, or other electronic storage medium. Further, the MADD 108 may receive advertisements through one medium (e.g., a CD-ROM, DVD or Blu-ray disk loaded into a suitable drive) and the advertisement selection criteria table through another medium, such as a wireless connection.

At block 404, the MADD 108 may determine its current position and the current time in block 404 using a variety of known techniques. Its current position may be determined based upon a closest Wi-Fi hotspot, a closest cellular telephone access mode ID, information provided by a GPS receiver included in the MADD 108, and combinations of these techniques. The current time may be determined based on a local clock in the MADD 108, a clock signal received from a GPS receiver, or clock signals from a network connection (e.g., a cellular telephone network).

At block 406, the MADD 108 may select an advertisement based on the determined position and time. The MADD 108 may select the advertisement associated with the position or time in the table received or downloaded in block 402. The MADD 108 may display the selected advertisement in block 408. The process may be repeated periodically in a loop by the MADD processor returning to block 404 to determine its position and time, and select and display the appropriate advertisements by repeating blocks 406 and 408.

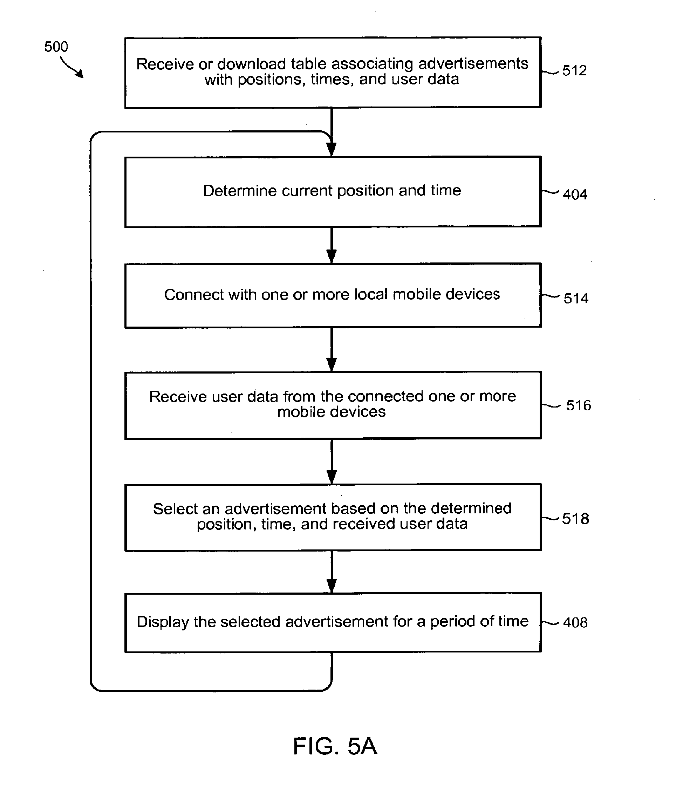

FIG. 5A illustrates an aspect method 500. Method 500 is similar to method 400 described above with reference to FIG. 4 with the addition of operations that interact with a nearby mobile device 106. In block 512, the MADD 108 may receive or download a plurality of advertisements and an advertisement selection criteria table associating advertisements with positions, times, and user data. Operations in block 512 may be performed similarly to those described above with respect to block 402 except that the advertising selection criteria table may also associate advertisements with mobile device user data. Such mobile device user data may provide further criteria for selecting advertising for presentation that is relevant to particular mobile device users within the vicinity of the MADD 108. Such mobile device user data may include demographic type information (as may be authorized by users). At block 404, a MADD 108 may determine a current position and a time as described above with respect to the method 400.

The MADD 108 may establish a wireless communication link with one or more mobile devices 106 in block 514. As discussed above, this wireless communication link may be any known wireless communication link, such as Bluetooth, Wi-Fi, FlashLinq, etc. In one aspect, the range of this wireless communication link is limited to the extent that a user of the mobile device so connected is likely able to view the advertising display. In block 516, the MADD 108 may receive user data from any connected mobile devices 106. User data may include a variety of demographic type information that may be useful to advertisers in identifying a consumer or demographic group within visual range of the MADD 108. For example, such user data may include age, sex, marital status, hobbies, interests, political party or other demographic characteristics of the user. Such user data may be provided by or obtained from third party databases, such as customer loyalty programs (e.g., a customer loyalty program of the advertiser), public databases, and social network database (e.g., FaceBook®, LinkedIn®, etc.).

As a further example, the user data may include user preferences that users have entered into their mobile devices for the purpose of communicating with such mobile advertising systems, such as preferred restaurants or types of food, interest in receiving coupons, merchant loyalty program memberships, etc. This user data may be stored in memory on the mobile device 106 and transmitted to the MADD 108 after connecting, such as in response to a message requesting such data. Alternatively, user data may be actively sent by a user, either in response to a prompt or independently, such as by the user pressing a command key or selecting a menu option to initiate the transmission of such information.

In block 518, the MADD 108 may select an advertisement based on the determined position, time, and any received user data, such as by comparing such user data to the advertisement selection criteria listed in the table received or downloaded in block 512. The MADD 108 may display the selected advertisement in block 408. This process may be repeated periodically by returning to block 404 based upon current location, time and gathered user data by repeating blocks 404 through 408 as described above.

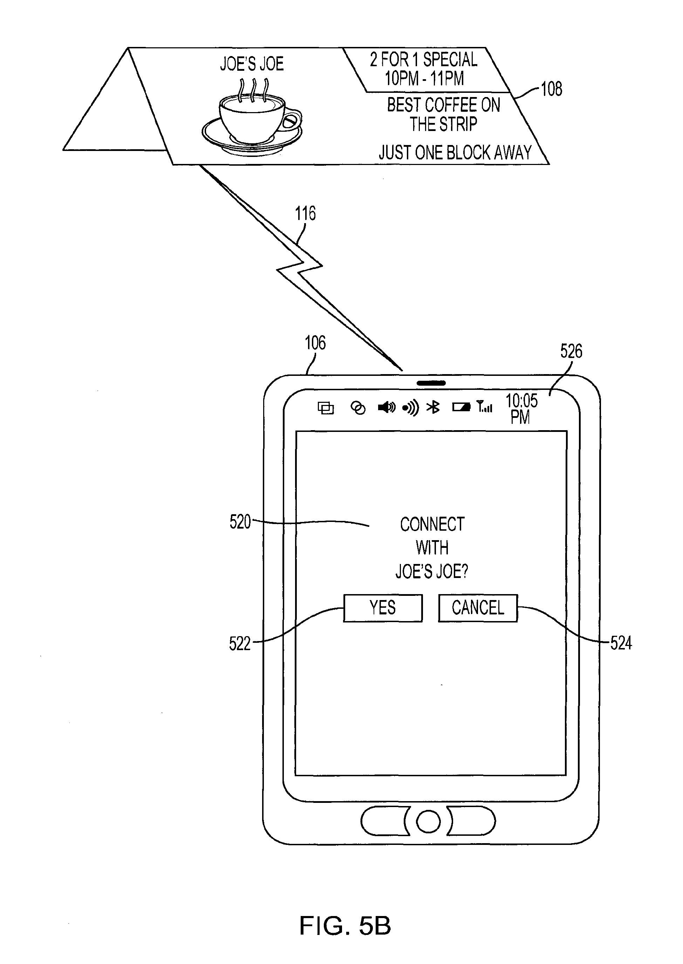

FIG. 5B illustrates a mobile device 106 communicating with a MADD 108. When a mobile device 106 is within wireless communication range with a MADD 108, a wireless communication link 116 may automatically be initiated. The wireless communication range will depend upon the type and configuration of communication link 116. For example, a Bluetooth communication link may have a relatively short range, while a Wi-Fi communication link may have a longer range. As another example, a Flashlinq™ communication link may be used to establish longer range communication links. FlashLinq is a synchronous time division duplexing orthogonal frequency division multiplex application (TDD OFDMA) technology operating on dedicated licensed spectrum that is distinguished by its high discovery range (up to a kilometer), discovery capacity (thousands of nearby devices) and distributed interference management. By enabling the simultaneous discovery and communication of thousands of proximal devices, FlashLinq™ can effectively create a "neighborhood-area network," where fixed and mobile peer applications can interact directly. Once the wireless communication link is established, the mobile device 106 may respond in several ways. In one aspect, the mobile device 106 may display a prompt 520 on the display asking whether the user would like to connect with the MADD 108. In the aspect shown in FIG. 5B, the MADD 108 may be identified by the brand being advertised which the user may easily recognize in prompt 520. The user may input "Yes" 522 to authorize a connection with the MADD 108 or "Cancel" 524 to block a connection attempt.

Users may dislike being prompted automatically, particularly in areas with several MADDs 108 (e.g., as may occur in the vicinity of hotels, airports, events, etc.) since receiving multiple prompts could become distracting. Therefore, some aspects may include a mobile device 106 configured to allow the user enable or disable such a prompting mode. When the prompting mode is on, the mobile device 106 may display prompts 520 when contacted by MADDs 108.

Further aspects may allow the user to manually connect with a nearby MADD 108. A user may see a MADD 108 and be interested in the displayed advertisement. In such an aspect, the user may select the MADD 108 from a list of available connections on the mobile device 106. This list of available connections may be generated by the mobile device while receiving link establishment requests from nearby MADDs 108. In response to receiving such a user input, the mobile device 106 may display a prompt 520 to enable the user to confirm the connection.

Further aspects may automatically connect mobile devices to any MADD 108 within range without the need for a user authorization. In an aspect, a mobile device 106 may be configured to allow the user to toggle, enable, or disable such an automatic mode.

Since advertisements displayed on the MADD 108 may be selected based on time, the advertisements can be tailored to those that consumers may find particularly relevant, such as advertising breakfast specials in the morning and dinner specials in the early evening. For example, as shown in FIG. 5B, the MADD 108 may show that a special is available from 10 PM to 11 PM. If the current time is 10:05 PM, as shown in the time window 526, a user may be motivated to take advantage of the special offer.

Because the MADD 108 determines its position, this information may also used to display directions to an advertised business as part of the displayed advertisement. This aspect is illustrated in FIG. 5B, in which the advertisement includes online that the advertised business is just one block away. As a further example, if the MADD 108 has access to the business's location, the MADD 108 may determine and display walking or driving directions from its current position to the advertising business. For example, the displayed advertisement may include direction such as "one block east and one block north" or "east on Main St. then left on King St." Such directions would then be updated as the MADD 108 moves, consistent with its new position.

While in some aspects the advertisements and advertisement selection criteria may be downloaded in advance to the MADD 108, in other aspects this information may be wirelessly downloaded to the MADD 108 at any time. This may enable updating of advertisements as well as updating of advertisement selection criteria as advertisers may prefer. In a further aspect, advertisements may be downloaded from an advertising server appropriate to the MADD 108 position and time, either to override advertisements preloaded on the device or to avoid the need to store advertisements altogether. If a MADD 108 already has advertisement stored in memory, such as if the advertising server previously transmitted advertisements, it may be more efficient to implement a local change to an advertising scheme by transmitting new or preemptive advertising selection criteria table rather than transmitting the advertisement itself.

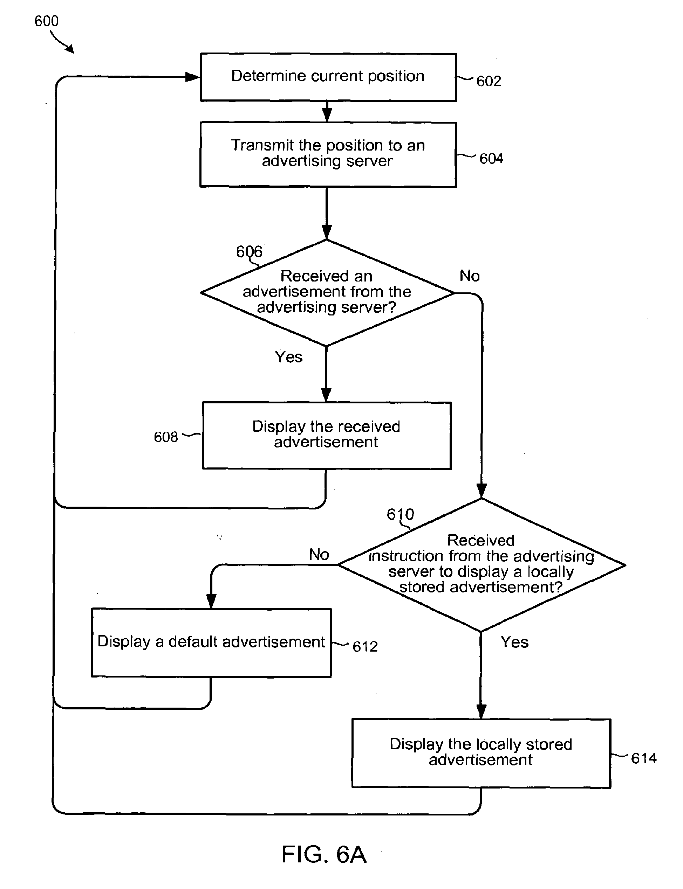

FIG. 6A illustrates an aspect method 600 for displaying advertisements on a MADD 108 in which the MADD 108 receives advertisements from an advertising server 104. The MADD 108 may determine its current position in block 602 and transmit the determined position to an advertising server 104 in block 604. This communication may be by way of an established wireless communication link (e.g., a cellular data link or Wi-Fi network). At determination block 606, the MADD 108 may monitor the communication link to determine whether an advertisement has been received from the advertising server 104. If the MADD 108 receives an advertisement from the advertising server 104 (i.e., determination block 606 = Yes), then the MADD 108 may display the received advertisement in block 608.

If the MADD 108 does not receive an advertisement for immediate display (i.e., determination block 606 = No), the MADD 108 may determine whether the MADD 108 has received an advertisement selection instruction (e.g., an updated or preempting advertisement selection criteria table) for selecting an advertisement already stored on the MADD 108 in determination block 610. If the MADD 108 does receive an advertisement selection instruction from the advertising server 104 (i.e., determination block 610 = Yes), the MADD 108 may implement that instruction to select the appropriate advertisement for memory for immediate display in block 614. On the other hand, if the MADD 108 does not receive a new advertising selection instruction from the advertising server (i.e., determination block 610 = No), then in block 612 the MADD 108 may select an advertisement for display in the manner described above with reference to the FIGs. 4 and 5, which may be considered a default advertisement. Alternatively, the default advertisement may advertise the MADD 108 itself as available advertising space, which may be the default condition when no advertisements have been stored in memory.

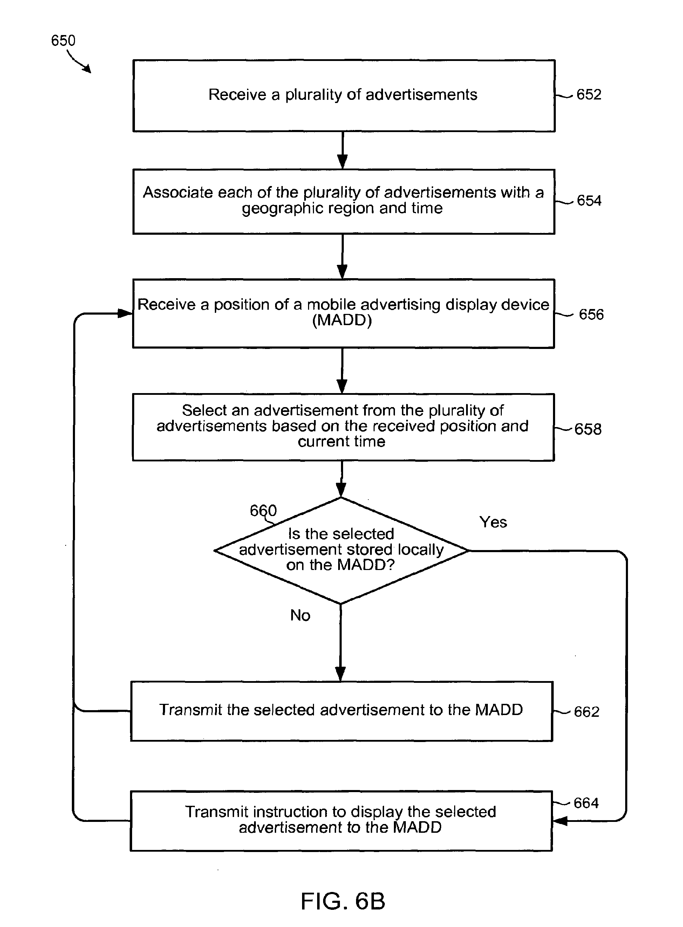

FIG. 6B illustrates an aspect method 650 that may be implemented in a server, such as an advertising server 104, for selecting an advertisement for display and transmission to the MADD 108. The advertising server 104 may receive a plurality of advertisements from sponsor servers in block 652. These advertisements may come from businesses wishing to advertise on the MADD 108. The businesses may have a sponsor server 110. Sponsor servers may transmit advertisements to the advertising server 104, such as through a network connection 122 or via the Internet 112.

The advertising server may associate each received advertisement with a geographic region and time in block 654. These associations may be assembled into a data structure, such as the example advertising selection criteria table 300 described above with reference to FIG. 3A. Thus, this operation may involve assigning particular advertisements to specified times within defined geographic zones. However, the associations may be in any format that may be requested by advertisers and organized in any form of data structure. The ad/location/time associations may be defined in advertising sales agreements or requests from the businesses or sponsor servers 110. For example, a business may have contracted to have its advertisement displayed in Zone A from 6 PM to 12 AM. Further, when the advertising server receives that particular advertisement from that business's sponsor server 110, the advertisement may be associated with Zone A from 6 PM to 12 AM.

The advertising server 104 may receive a position of a MADD 108 in block 656. The advertising server may use the received position and the current time to select an advertisement suitable for immediate display in block 658. The advertising server 104 may rely on the associations generated in block 654 to select the advertisement.

The advertising server 104 may determine if the selected advertisement is stored locally on the MADD 108 in determination block 660. The selected advertisement will be stored in the MADD 109 when the advertising server previously transmitted the selected advertisement to the MADD for storage on local memory. If the selected advertisement is stored on the MADD 108 (i.e., determination block 660 = Yes), in block 664 the advertising server 104 may transmit an advertisement selection instruction to the MADD 108 commanding it to display the selected advertisement. If the server 104 determines that the selected advertisement is not stored locally on the MADD 108 (i.e., determination block 660 = No), then in block 662 the advertising server 104 may transmit the selected advertisement to the MADD 108. This process may continue in the loop by the server 104 returning to block 656 to monitor further position reports received from the MADDs.

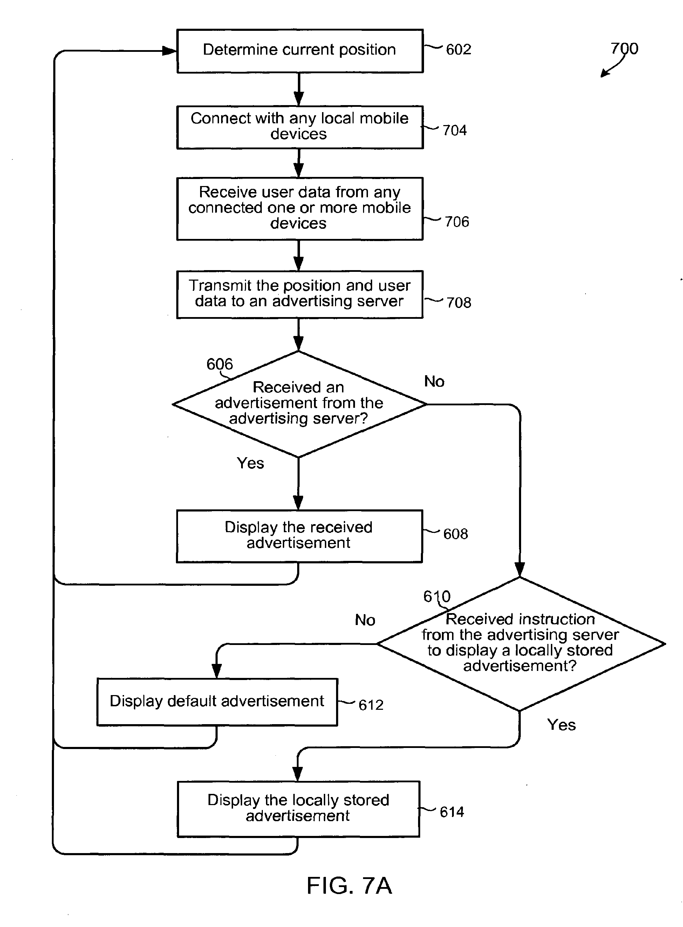

FIG. 7A illustrate an aspect method 700 for displaying an advertisement on a MADD 108 that combines blocks for interacting with mobile devices with method 600 (described above with reference to FIG. 6A). In method 700, the MADD 108 may determine its current position in block 602. The MADD 108 may connect with any mobile devices 106 within range in block 704, and receive user data from any connected mobile devices 106 in block 706. The MADD 108 may transmit its position, as well as any received user data to an advertising server in block 708. Again, this transmission of information may be accomplished by established wireless communication link (e.g., a cellular telephone data link, Wi-Fi, FlashLinq™, etc.).

In determination block 606, the MADD 108 may determine whether it has received an advertisement from the advertising server 104. If the MADD 108 has received an advertisement from the advertising server 104 (i.e., determination block 606 = Yes), then the MADD 108 may promptly display the received advertisement in block 608.

If the MADD 108 has not received an advertisement (i.e., determination block 606 = No), then in determination block 610 the MADD 108 may determine whether the MADD 108 has received an advertisement selection instruction to display an advertisement already stored on the MADD 108. If the MADD 108 receives an advertisement selection instruction from the advertising server 104 (i.e., determination block 610 = Yes), the MADD 108 may use the received selection instruction to select the appropriate advertisement from the memory and display the advertisement in block 614. If the MADD 108 has not received an advertising selection instruction from the advertising server (i.e., determination block 610 = No), in block 612 the MADD 108 may select a default advertisement for display such as by using the methods described above with reference to FIGs. 4 and 5. Again, this process may be performed periodically in a loop, such as by the MADD processor returning to block 602 to update the current position of the MADD 108.

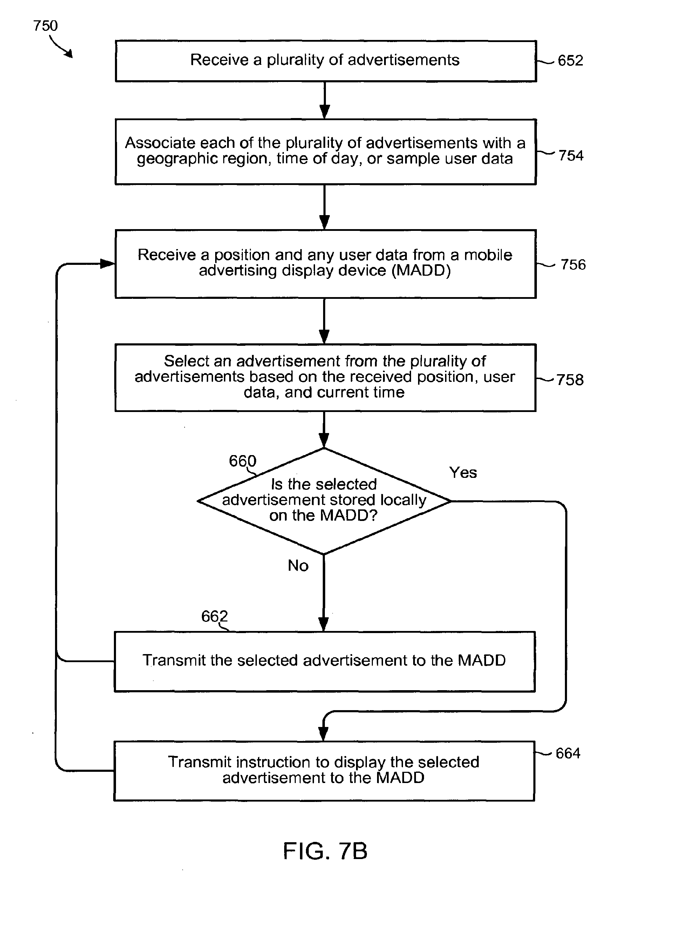

FIG. 7B illustrates an aspect method 750 that may be implemented in an advertising server that is similar to the method 650 described above with reference to FIG. 6B, with the addition that the advertising server can consider mobile device user data received from the MADD 108. As described above with reference to FIG. 6B, the advertising server 104 may receive a plurality of advertisements in block 652. These advertisements may come from businesses wishing to advertise on a MADD 108. The advertising server may associate each received advertisement with a geographic region, time, and/or target user data in block 754.

The advertising server 104 may receive a position of a MADD 108 and any user data collected from mobile devices 106 connected to the MADD 108 in block 756. The advertising server may use the received position and user date, as well as the current time to select an advertisement in block 758.

At determination block 660, the advertising server 104 may determine whether the selected advertisement is stored locally on the MADD 108. As described above, this determination may be based upon whether the selected advertisement has previously been communicated or downloaded to the MADD 108. If the advertising server determines that the selected advertisement is stored on the MADD 108 (i.e., determination block 660 = Yes), the advertising server 104 may transmit to the MADD 108 an advertisement selection instruction to display the selected advertisement in block 664. If the selected advertisement is not stored locally on the MADD 108 (i.e., determination block 660 = No), then in block 662 the advertising server may transmit the selected advertisement to the MADD 108. Again, the method 750 may be performed periodically such as by the server 104 returning to block 756 to receive further position updates and user data from mobile advertising display devices.

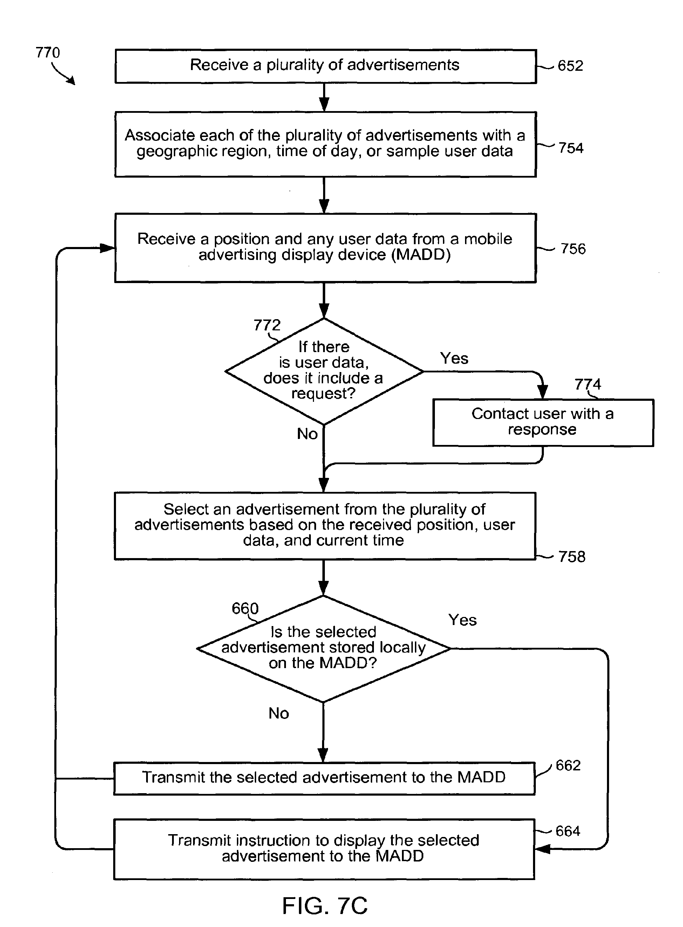

FIG. 7C illustrates another aspect method 770 which may be implemented in an advertising server that allows the advertising server to respond to a request from a mobile device user, such as for more information, a coupon, etc. In method 770, the advertising server 104 may receive a plurality of advertisements in block 652. The advertising server may associate each received advertisement with a geographic region, time, or targeted user data in block 754.

The advertising server 104 may receive a position of a MADD 108 and any user data collected from mobile devices 106 connected to the MADD 108 in block 756. The advertising server 104 may determine whether any received user data includes a request for information or a coupon from a user in determination block 772. User requests may include requests for more information about the advertised business or product, requests for directions to the business, request for coupons, or responses to advertised opportunities (e.g., an opportunity to order the product online via a web browser running on the mobile device).

If the received user data does not include a user request (i.e., determination block 772 = No), then the advertising server may proceed to block 758 and complete the method 770 consistent with method 750 as described above with reference to FIG. 7B. If the received user data does include a user request (i.e., determination block 772 = Yes), then the advertising server 104 may respond to the request in block 774 before going on to block 758 and completing the method 770 consistent with method 750 as described above with reference to FIG. 7B. Responses to requests generated in block 774 may vary based on the request. For example, a user may be interested in a coupon advertised on a MADD 108. The user may use a mobile device to connect with the MADD 108 and transmit a request for the coupon as part of transmitting user data. The MADD 108 may pass the received user data, including the request, to the advertising server. The advertising server may respond to the request by transmitting a coupon for the deal to the user. This coupon may be transmitted directly to the user's mobile device 106 through a wireless communication network. Alternatively, the coupon may be forwarded to the MADD 108 and distributed to the requesting mobile device (or all mobile devices in the area) through the established local wireless communication link.

In another example, a user may request more information about the subject of the advertisement. The response to the user in such a situation may be a URL or similar address to direct the user to the requested resources, such as a menu on the business's website.

Although in this aspect method the advertising server responds to the requests, in further embodiments the MADD 108 may respond to such requests instead of the advertising server 104, or both may respond to different types of requests. The MADD 108 may receive associated resources, such as coupons, links, or other data when the MADD 108 receives an advertisement and pass these resources along to user in response to requests.

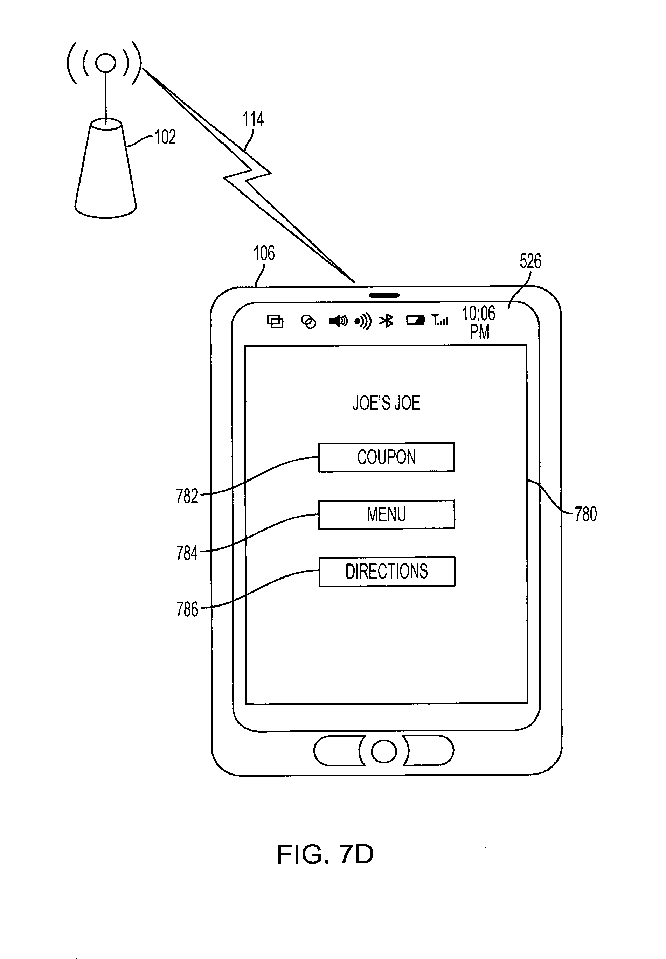

FIG. 7D illustrates a mobile device display of a possible response to a user request received from an advertising server via the wireless communication system 102. The illustrated display is an example of what might be received by a mobile device 106 in response to enabling a communication link with the MADD 108, such as if the user responded "Yes" 522 to the prompt 520 in FIG. 5B. This positive input may be communicated from the MADD 108 to the advertising server as a general user request. If the request is a general request for information, the user may be provided with a list 780 of options from which to select. In this example, the display options include an option to receive a coupon 782, an option to receive a menu 784 for the business, and an option to receive directions 786 to the business. In such an implementation, the mobile device may also be configured with an application or executable software that link the displayed options to commands so that the user may select one of these options to receive corresponding information by pressing the touch screen, in response to which the mobile device sends an appropriate communication to an appropriate server via the wireless communication system 102. For example, the mobile device 106 may transmit a request for a coupon to the advertising server 104 via the same communication system 102 that the advertising server uses to transmit the coupon back to the mobile device 106.

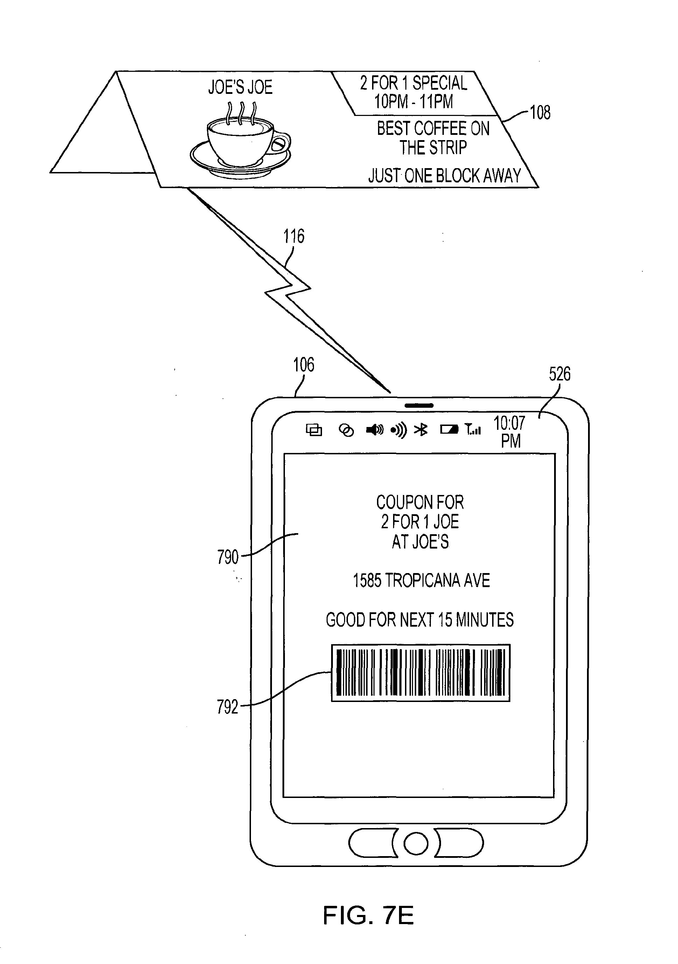

FIG. 7E illustrates another aspect display that may result from a request for information directed to the MADD 108. For example, if the user selected "Coupon" 782 from list 780 shown in FIG. 7D, the MADD 108 may transmit a coupon 790 to the mobile device 106 via the established wireless communication link 116. The electronic coupon 790 may include information describing how to redeem the coupon, such as an address or time frame. The coupon 790 may also include a bar code 792 or other form of identification to use in redeeming the coupon.

FIGS. 5B, 7D, and 7E are only intended as example displays and information that may be presented on a mobile device according to the various aspects. In an alternative aspect, mobile device displays may provide a list of options 780 that are transmitted from the MADD 108 or other information from the advertising server 104. Further aspects may provide various types of information for display on and use by mobile devices from various other sources (including sources accessed via the Internet) in response to a user request.

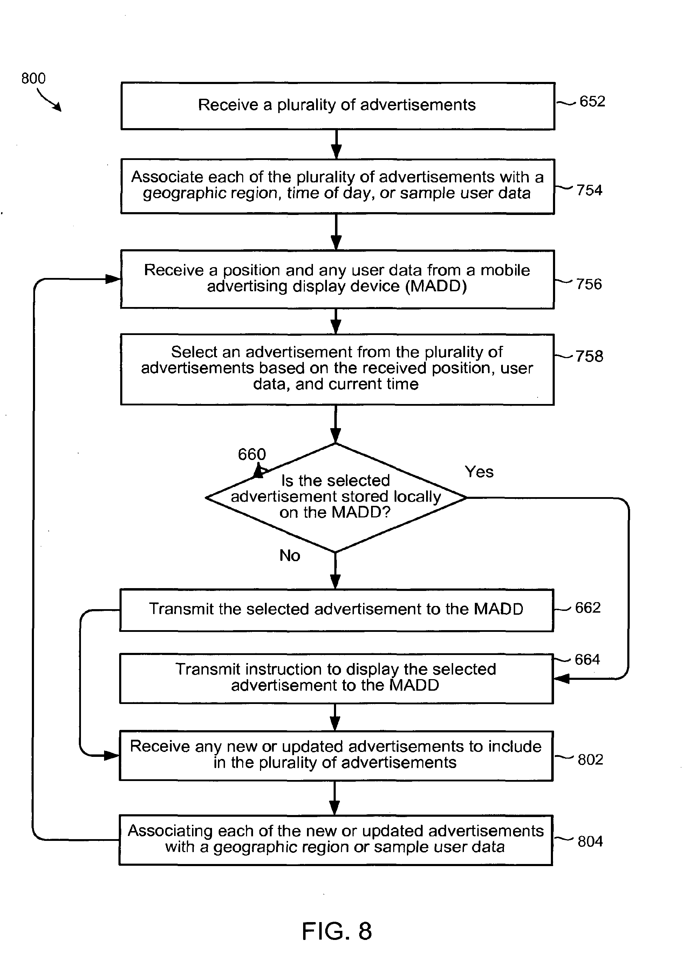

The advertising server may be configured to continually update the advertisements and advertisement selection criteria implemented on MADDs. FIG. 8 illustrates an aspect method 800 for updating advertisements to be displayed on a MADD 108. An advertising server 104 may receive a plurality of advertisements in block 652. These advertisements may come from businesses wishing to advertise on a MADD 108. The advertising server may associate each received advertisement with a geographic region, time, or sample user data in block 754.

The advertising server 104 may receive a position of a MADD 108 and any user data collected from mobile devices 106 connected to the MADD 108 in block 756. The advertising server may use the received position and user data, as well as the current time to select an advertisement in block 758.

The advertising server 104 may determine if the selected advertisement is stored locally on the MADD 108 in determination block 660. If the selected advertisement is stored on the MADD 108 (i.e., determination block 660 = Yes), then the advertising server 104 may transmit an instruction to the MADD 108 to display the selected advertisement in block 664. If the selected advertisement is not stored locally on the MADD 108 (i.e., determination block 660 = No), then the advertising server may transmit the selected advertisement to the MADD 108 in block 662.

The advertising server 104 may receive any new or updated advertisements in block 802. The advertising server 104 may associate any new or updated advertisements with a geographic region, time, or sample user data in block 804. New or updated advertisements may be available for selection and transmission to the MADD 108 if blocks 758 and 662 are repeated.

By allowing for new and updated advertisements, businesses or other advertisement sponsors may adjust their messages to the public in real-time. For example, a restaurant may continually update its MADD advertisements with the number of open tables. Coupons may be spontaneously generated based on actual conditions in the restaurant, such as the number of open tables available, rather than requiring promotions to be carefully planned in advance. Such dynamic coupons may be made available or valid only for a short period. For example, a bar with an unexpectedly slow night may post a MADD advertisement with coupons for drink specials for the next 20 customers or for the next hour. Because the advertisements displayed on MADDs may be based on the geographic region, the businesses can tailor these limited deals to people already in the right area, since only they will see the displayed advertisements.

In another example, breaking news or public safety announcements, such as AMBER alerts or tornado warnings, may be displayed on MADDs 108 in real time. These announcements may be targeted to specific zones and updated quickly in place of the normal advertisements. In the case of public announcements, the aspects work the same as advertisements only the source of the display may be a government agency, rather than a business entity.

In an aspect, a mobile advertising display device may be in the form of a license plate. Such a MADD 108 may display the vehicle's license plate number at such times that the license plate number is required for tracking enforcement purposes. At times when the license plate number is not needed, the MADD 108 may display other images, such as advertising. In such an aspect, the MADD 108 may remotely controlled, such as by an advertising server, to change its display if the host vehicle is reported as missing or involved in a crime. The new display on the MADD 108 may help police officers quickly identify stolen vehicles, getaway vehicles, or vehicles with outstanding tickets.

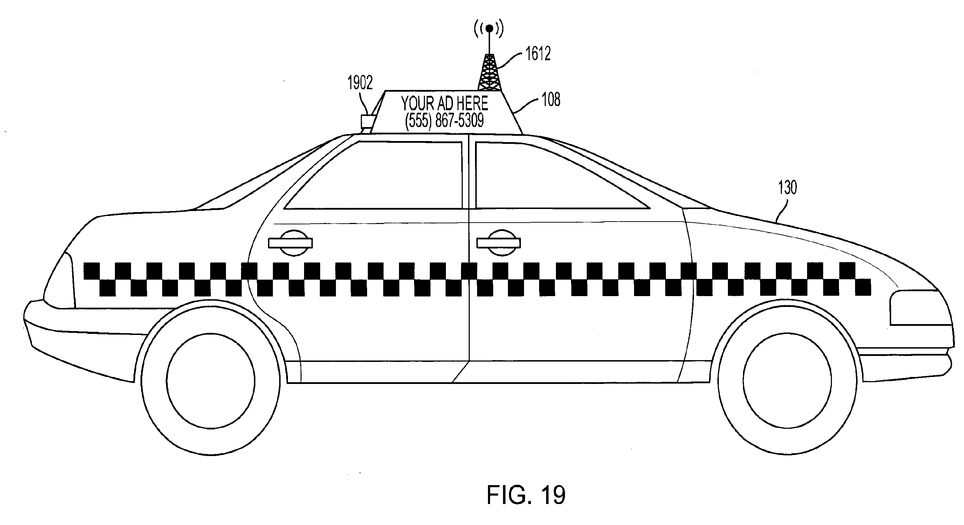

Such mobile advertising devices may be employed on any vehicle with sufficient space for mounting a MADD. For example FIGs. 1 and 19 show a MADD 108 mounted on a taxicab, but MADDs may be placed in various other places. For example, a MADD may be placed on top or on the side of trains, buses, or tractor trailers. Private individuals may mount a MADD on their personal vehicles in order to be compensated for advertising while driving around the town.

Businesses sponsoring mobile advertising may pay an advertiser for providing advertisement space on a MADD 108. Businesses or individuals who mount a MADD 108 on a vehicle may also be compensated for providing advertising services. The compensation provided in return for mounting a MADD 108 on a vehicle may be tiered. For example, an advertiser may be paid a base amount simply for displaying an advertisement. Such mobile advertisers may be paid more money depending upon the advertising zones and times they are operating their vehicle. For example, some advertising zones may greater compensation since the consumers who may view the ad are more numerous or likely to pay more for the advertised product or service. In a further aspect, the advertiser may be paid more money depending on how engaged a consumer or mobile user becomes with the advertisement. For example, in implementations in which consumers can interact with the advertisement or the advertising server via their mobile devices, the operator of the vehicle with the MADD 108 that initiated this interaction may receive additional compensation. Various aspect methods involving this tiered approach to compensation for advertising are discussed below.

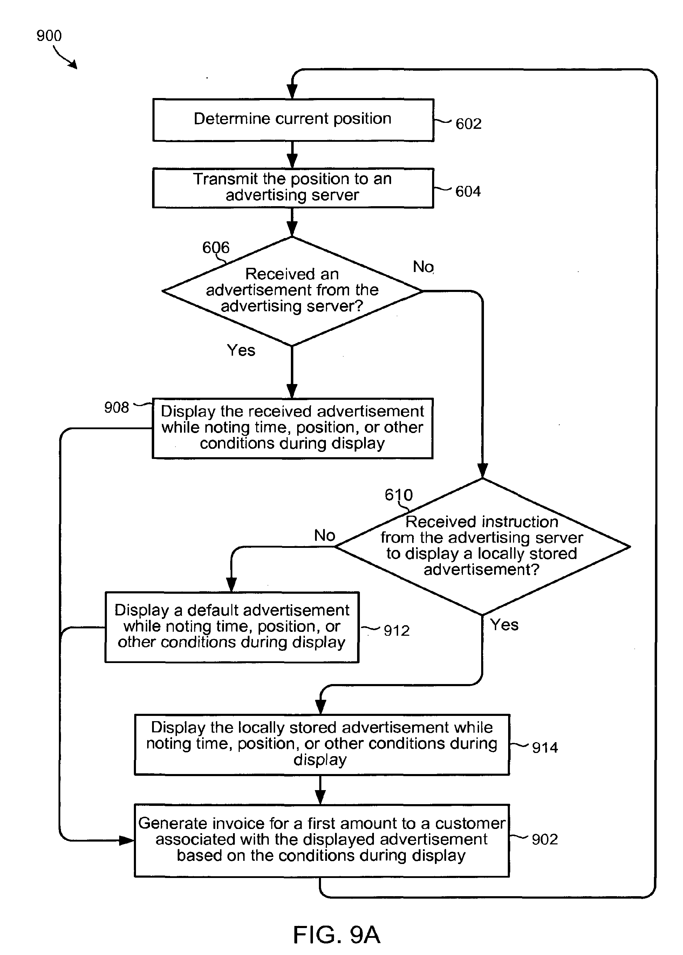

FIG. 9A illustrates an aspect method 900 for invoicing a first amount for displaying an advertisement on a MADD 108. The MADD 108 may determine its current position in block 602 and transmit the determined position to an advertising server 104 in block 604. The MADD 108 may receive an advertisement from the advertising server 104 in determination block 606. If the MADD 108 receives an advertisement from the advertising server 104 (i.e., determination block 606 = Yes), then the MADD 108 may display the received advertisement in block 908 while noting various conditions or events during the display. These conditions or events may include various types of information related to the MADD 108 or the displayed advertisement. For example, the MADD 108 may record its location while displaying the advertisement, the length of time the advertisement was displayed, the start time of the advertisement, or a number or list of wireless data links established with mobile devices while the advertisement was displayed.

If the MADD 108 does not receive an advertisement (i.e., determination block 606 = No), the MADD 108 may receive an instruction to display an advertisement already stored on the MADD 108 in determination block 610. If the MADD 108 does not receive an instruction from the advertising server (i.e., determination block 610 = No), the MADD 108 may display a default advertisement while noting various conditions of the MADD during the display in block 912. If the MADD 108 does receive an instruction from the advertising server 104 (i.e., determination block 610 = Yes), the MADD 108 may display the advertisement indicated by the instruction while noting various conditions of the MADD during the display in block 914.

During or after displaying an advertisement in blocks 908, 912, or 914, the MADD may generate an invoice for a first amount associated with the displayed advertisement based on any noted conditions in block 902. This invoice may be an electronic invoice, or it may be as simple as a journal entry made in an accounting system, cable or database. The amount of money invoiced based upon any noted conditions may vary. For example, the invoiced amount may be higher if the advertisement was displayed for a long time, or the invoiced amount may be lower if the MADD was stationary for most of the display time. Multiple conditions may be factored into determining the amount to invoice or otherwise charge the company purchasing the advertising.

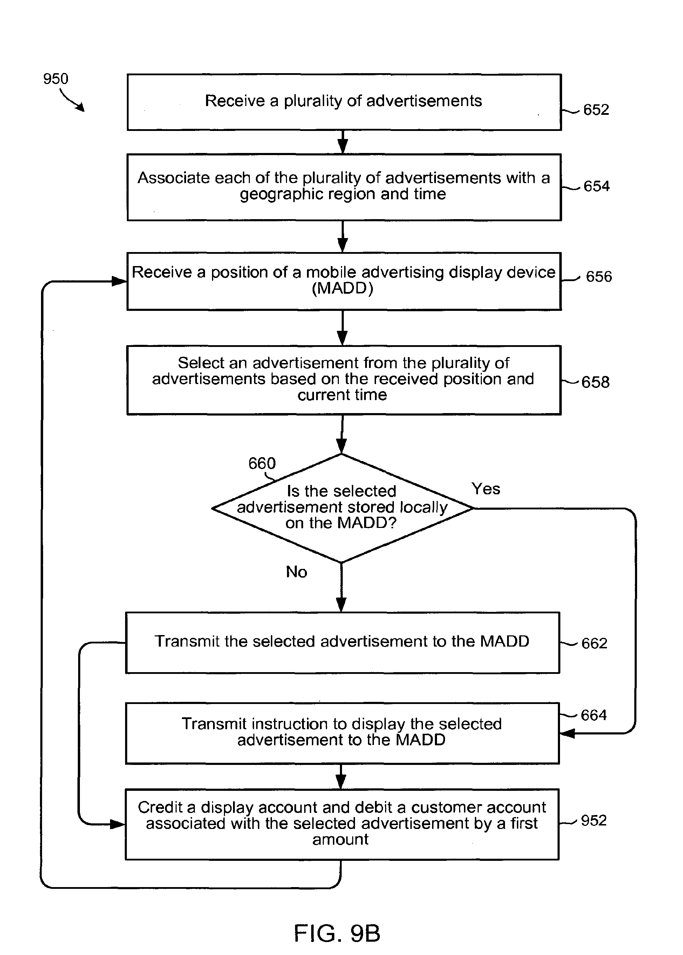

FIG. 9B illustrates an aspect method 950 that may be implemented in a server, such as an advertising server, for crediting and debiting accounts of operators of mobile advertising devices. As described above, the advertising server 104 may receive a plurality of advertisements in block 652 and associate each received advertisement with a geographic region and time in block 654. The advertising server 104 may receive a position of a MADD 108 in block 656. The advertising server may use the received position and the current time to select an advertisement in block 658. The advertising server 104 may rely on the associations generated in block 654 to select the advertisement.

The advertising server 104 may determine if the selected advertisement is stored locally on the MADD 108 in determination block 660. If the selected advertisement is stored on the MADD 108 (i.e., determination block 660 = Yes), then the advertising server 104 may transmit an instruction to display the selected advertisement in block 664. If the selected advertisement is not stored locally on the MADD 108 (i.e., determination block 660 = No), then the advertising server may transmit the selected advertisement to the MADD 108 in block 662.

After transmitting either a selected advertisement in block 662 or an instruction in block 664, the advertising server 104 may credit an account of an operator of the mobile advertising device, and debit an account of a business purchasing the advertising in block 952. For example, the charges for advertising debited against the business's account may include charges for services provided by the advertising server as well as fees paid to the operator of the vehicle on which the mobile advertising device is mounted. In this manner, the server can determine the amount of money that should be remitted to the operator of the vehicle based upon the value of the advertising displayed by its mobile advertising display unit. Payments may then be made to vehicle operators at appropriate intervals, such as monthly. The transmission of invoices to businesses purchasing advertising and the transfer of payments to vehicle operators may be handled electronically.

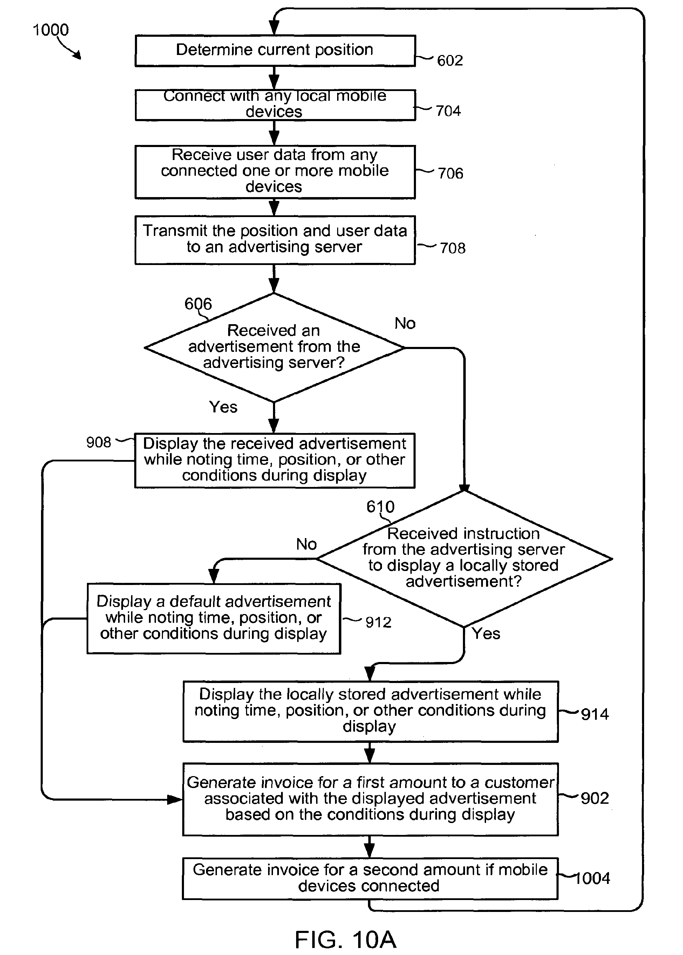

FIG. 10A illustrates an aspect method 1000 for invoicing businesses for displaying an advertisement on a MADD 108 with the invoiced amount depending upon interactions that occurred with mobile devices. As described above, the MADD 108 may determine its current position in block 602. The MADD 108 may connect with any mobile devices 106 within range in block 704 and receive user data from any connected mobile devices 106 in block 706. The MADD 108 may transmit its position as well as any received user data to an advertising server in block 708.

The MADD 108 may receive an advertisement from the advertising server 104 in determination block 606. If the MADD 108 receives an advertisement from the advertising server 104 (i.e., determination block 606 = Yes), then the MADD 108 may display the received advertisement in block 908 while noting various conditions or events related to the MADD during the display. As discussed above, these conditions or events may include a record of its location while displaying the advertisement, the length of time the advertisement was displayed, the start time of the advertisement, or a number or list of connections with mobile devices initiated while displaying the advertisement.

If the MADD 108 does not receive an advertisement (i.e., determination block 606 = No), then the MADD 108 may receive an instruction to display an advertisement already stored on the MADD 108 in determination block 610. If the MADD 108 does not receive an instruction from the advertising server (i.e., determination block 610 = No), then the MADD 108 may display a default advertisement while noting various conditions of the MADD during the display in block 912. If the MADD 108 does receive an instruction from the advertising server 104 (i.e., determination block 610 = Yes), the MADD 108 may display the advertisement indicated by the instruction while noting various conditions or events related to the MADD during the display in block 914.

After displaying an advertisement in block 908, 912, or 914, the MADD 108 may generate an invoice for a first amount to a customer associated with the displayed advertisement based on any noted conditions in block 902. The MADD 108 may also generate an invoice for a second amount in block 1004 based on the number of mobile devices that connected with the MADD 108 during the time that the advertisement was displayed. The second amount would represent a premium charge for the actual user interactions with the advertisement. Typically, advertisers are willing to pay more for ads when it can be proven that the ad was actually viewed or resulted in a user interaction. Thus, a mobile advertising device that establishes communication links with several mobile devices, such as to transmit coupons, directions or other information, has provided premium advertising services, and thus may be compensated accordingly. While FIG. 10A illustrates such premium advertising fees as being calculated in terms of two invoices, the amounts may be included in a single invoice.

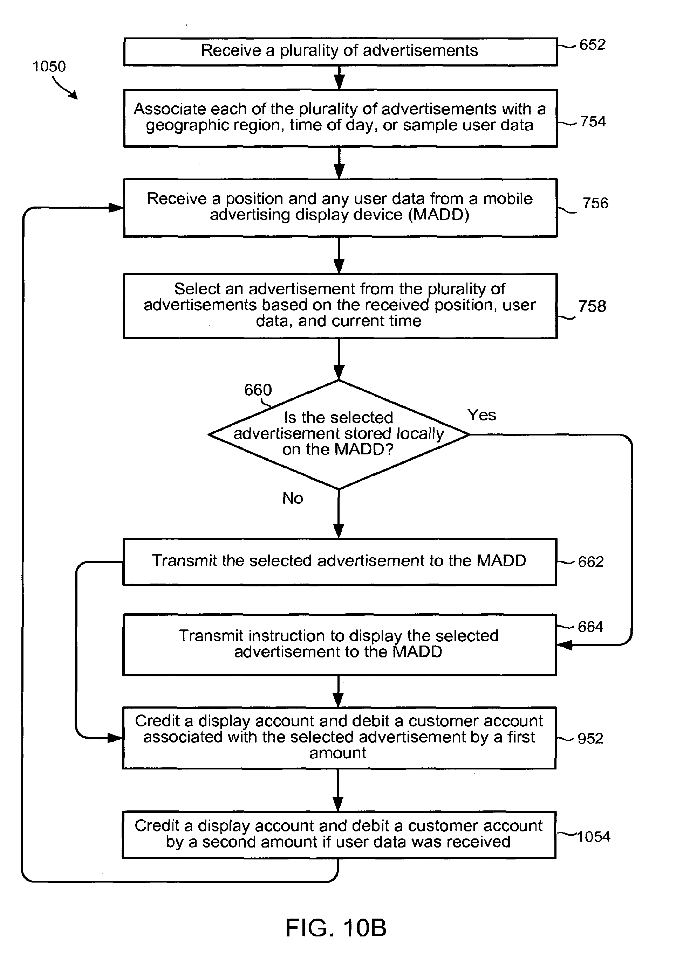

FIG. 10B illustrates an aspect method 1050 for crediting and debiting accounts by an advertising server. The advertising server 104 may receive a plurality of advertisements in block 652 and associate each received advertisement with a geographic region, time, or sample user data in block 754. The advertising server 104 may receive a position of a MADD 108 and any user data collected from mobile devices 106 connected to the MADD 108 in block 756. The advertising server may use the received position and user data, as well as the current time, to select an advertisement in block 758.

The advertising server 104 may determine if the selected advertisement is stored locally on the MADD 108 in determination block 660. If the selected advertisement is stored on the MADD 108 (i.e., determination block 660 = Yes), then the advertising server 104 may transmit an instruction to display the selected advertisement in block 664. If the selected advertisement is not stored locally on the MADD 108 (i.e., determination block 660 = No), then the advertising server may transmit the selected advertisement to the MADD 108 in block 662.

After transmitting either a selected advertisement in block 662 or an instruction in block 664, the advertising server 104 may credit an account of the vehicle operator and debit an account of the business purchasing the advertisement by a first amount in block 952 based on the selected advertisement. The advertising server may also credit the account of the vehicle operator and debit the account of the business by a second additional amount in block 1054 if any user data was received from a mobile device 106 connected with a MADD 108. For example, if the server communicated with any mobile devices as a result of viewing a mobile advertisement on a particular MADD 108, the operator of the vehicle by which the device is mounted may be paid an additional amount, which likewise would be charged to the business purchasing the advertisement. As discussed above, such communications between the mobile devices in the server may involve requests for coupons, more information, etc. The advertising server may also pay and charge a premium based upon the number of or amount of user data reported by the MADD 108 since that information may provide a measure of how widely the advertisement was viewed.

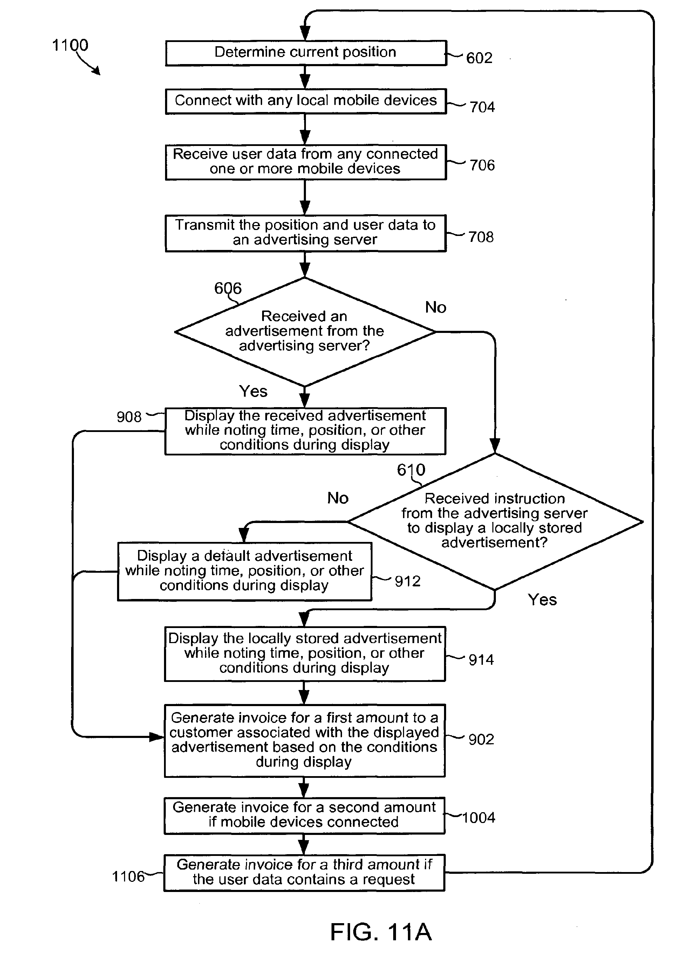

FIG. 11A illustrates an aspect method 1100 for invoicing different amounts for displaying an advertisement on a MADD 108 based on connecting to mobile devices 106 and receiving user requests. The MADD 108 may determine its current position in block 602. The MADD 108 may connect with any mobile devices 106 within range in block 704 and receive user data from any connected mobile devices 106 in block 706. The MADD 108 may transmit its position as well as any received user data to an advertising server in block 708.

The MADD 108 may receive an advertisement from the advertising server 104 in determination block 606. If the MADD 108 receives an advertisement from the advertising server 104 (i.e., determination block 606 = Yes), then the MADD 108 may display the received advertisement in block 908 while noting various conditions of the MADD during the display. These conditions may include various types of information related to the MADD or the displayed advertisement. For example, the MADD may record its location while displaying the advertisement, the length of time the advertisement was displayed, the start time of the advertisement, or a number or list of connections with mobile devices initiated while displaying the advertisement.

If the MADD 108 does not receive an advertisement (i.e., determination block 606 = No), then the MADD 108 may receive an instruction to display an advertisement already stored on the MADD 108 in determination block 610. If the MADD 108 does not receive an instruction from the advertising server (i.e., determination block 610 = No), then the MADD 108 may display a default advertisement while noting various conditions of the MADD during the display in block 912. If the MADD 108 does receive an instruction from the advertising server 104 (i.e., determination block 610 = Yes), the MADD 108 may display the advertisement indicated by the instruction while noting various conditions of the MADD during the display in block 914.

After displaying an advertisement in block 908, 912, or 914, the MADD 108 may generate an invoice for a first amount to a purchaser of the displayed advertisement based on any noted conditions or events in block 902. The MADD 108 may generate an invoice for a second amount based on the number of mobile devices connected with the MADD in block 1004. The MADD may generate an invoice for a third amount in block 1106 if user data received from any mobile devices contains any kind of request. Instead of generating three invoices, a single invoice may be generated for the full amount, which may list each of the first, second and third amounts.

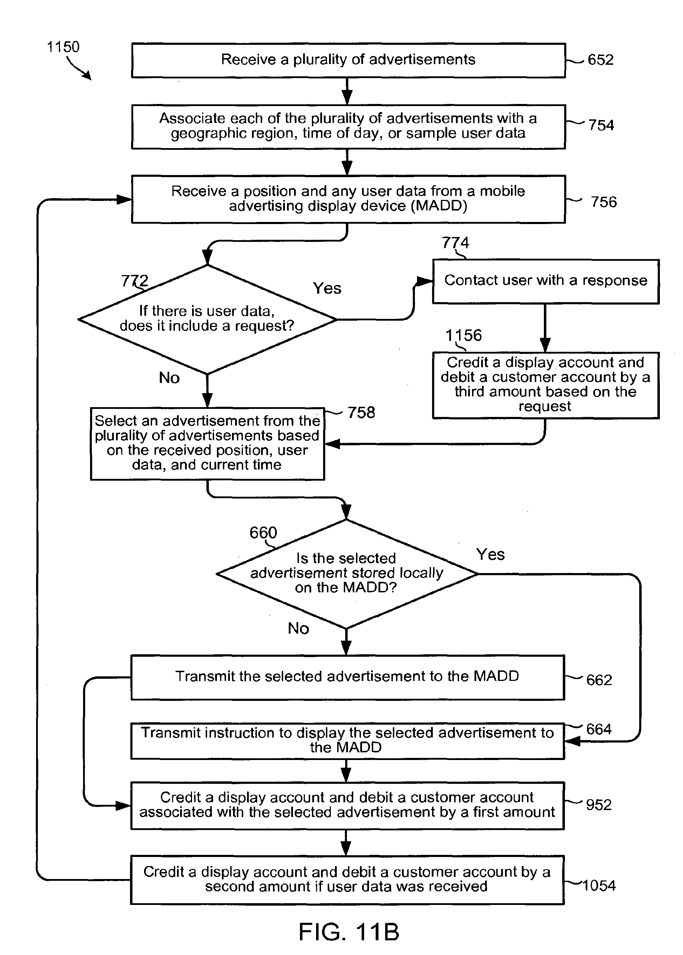

FIG. 11B illustrates an aspect method 1150 for crediting and debiting accounts by an advertising servers for different amounts depending on responses to user requests. The advertising server 104 may receive a plurality of advertisements in block 652 and associate each received advertisement with a geographic region, time, or sample user data in block 754. The advertising server 104 may receive a position of a MADD 108 and any user data collected from mobile devices 106 connected to the MADD 108 in block 756. The advertising server 104 may determine whether any received user data includes a request in determination block 772. User data may include various types of requests, such as requests for more information about the advertised business/product or requests for directions to the business.

If there is no request (i.e., determination block 772 = No), then the advertising server may proceed to block 758. If there is a request (i.e., determination block 772 = Yes), then the advertising server 104 may respond to the request in block 774. The advertising server may credit and debit accounts by a third amount on block 1156 based on any requests received in user data. Amounts may vary based on the type of request and form of reply provided.

The advertising server may use the received position and user date, as well as the current time to select an advertisement in block 758. The advertising server 104 may determine if the selected advertisement is stored locally on the MADD 108 in determination block 660. If the selected advertisement is stored on the MADD 108 (i.e., determination block 660 = Yes), then the advertising server 104 may transmit an instruction to display the selected advertisement in block 664. If the selected advertisement is not stored locally on the MADD 108 (i.e., determination block 660 = No), then the advertising server may transmit the selected advertisement to the MADD 108 in block 662.

After transmitting either a selected advertisement in block 662 or an instruction in block 664, the advertising server 104 may credit and debit accounts by a first amount in block 952 based on the selected advertisement. The advertising server may credit and debit the same accounts by a second amount in block 1054 if any user data was received from a mobile device 106 connected with a MADD 108.

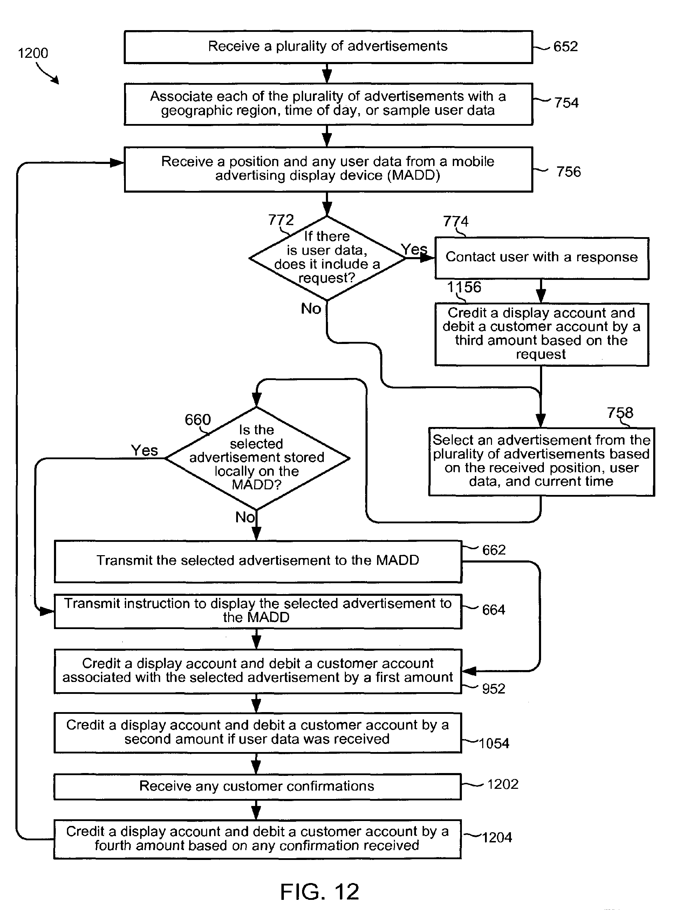

FIG. 12 illustrates an aspect method 1200 similar to method 1150 described above, but with extra blocks for crediting and debiting amounts based on customer confirmations. After transmitting either a selected advertisement in block 662 or an instruction in block 664, the advertising server 104 may credit an account and debit an account by a first amount in block 952 based on the selected advertisement. The advertising server may credit and debit the same accounts by a second amount in block 1054 if any user data was received from a mobile device 106 connected with a MADD 108.

The advertising server 104 may receive customer confirmations in block 1202. A customer confirmation may indicate that an advertising business successfully attracted a customer due to an advertisement displayed on a MADD 108. Various forms of customer confirmations may be used, including coupon redemption records, mobile device location data, and mobile device connections with local wireless networks in the business, etc. For example, customer confirmations may come directly from the business or the customer themselves. Customer confirmations may be generated automatically. For example, customer confirmations may automatically be generated by a business computer connected with a sponsor server 110 during redemption of a coupon 790 distributed to mobile devices by a MADD or advertising server. Confirmation that the user visited the business may be inferred from location data provided by the user's mobile device 106. In one aspect, the tracking of the mobile device 106 with each MADD 108 and a business visit may be accomplished based on the MAC or device ID exchanged during the establishment wireless communication links. Such confirmation may be used by the advertising server to credit an account and debit an account by a fourth amount in block 1204.

The locations, speeds and advertisements displayed by MADDs 108 may be tracked. By tracking such details, advertisers may determine the zones or regions that are responding well to mobile adverting and adjust advertising prices accordingly. Businesses or sponsors may be interested in the tracking data when deciding whether to purchase advertisements in certain areas or at certain times. Advertisers may also use tracking data to rearrange or redistribute MADDs for better advertising coverage.

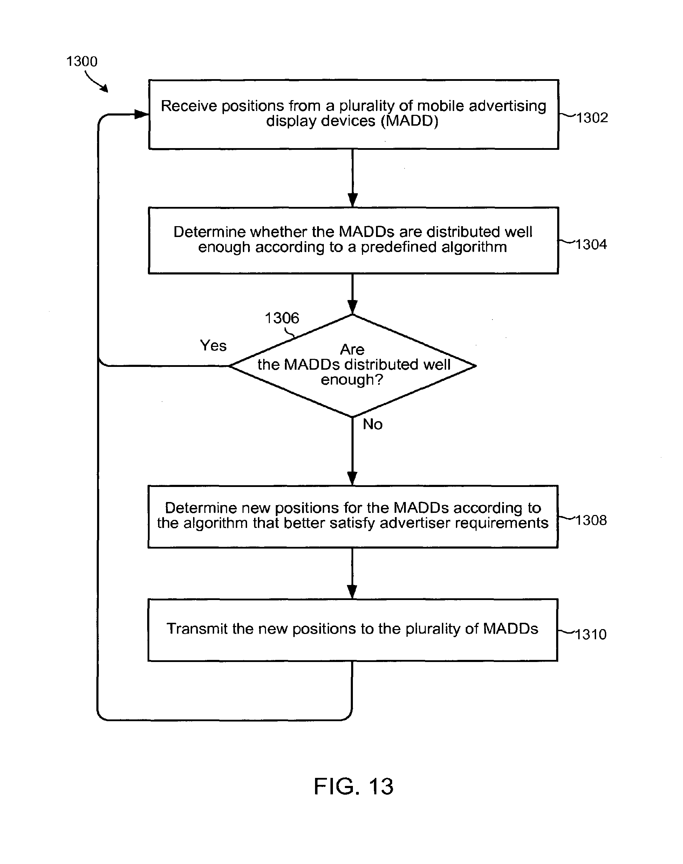

FIG. 13 illustrates an aspect method 1300 for redistributing MADDs 108. Current positions for a plurality of MADDs may be received in block 1302. A predetermined algorithm may be used to determine whether the MADDs are geographically distributed according to advertiser requirements and desires to meet their advertising goals. Advertisers may specify that MADDs 108 should be distributed in some manner (e.g., to cover a wide area), or concentrated in some areas (e.g., near centers of nightlife). These advertiser requirements may be defined in terms of minimum spacing thresholds, minimum density thresholds in some defined areas, and maximum density thresholds in some defined areas. To enable computer systems to support dispersing MADDs 108 according to such advertiser requirements, the associated thresholds may be implemented in an algorithm that can be implemented on the advertising server 104 (or other computing device). Such an algorithm may range from a simple spacing rule (e.g., MADDs should be spaced at least X meters apart) to prevent clustering, to more advanced multi-factor algorithms considering the time of day, content of advertisements, preferred customers or businesses, profitability of certain zones, and multiple other variables. As an example, companies may want their advertisements to be seen at certain times and locations, so if no vehicles are present in those advertising zones and the target times, it may be necessary to redirect some vehicles accordingly.

In block 1304, the MADD position data may be compared to the spacing, density and/or location thresholds established by advertisers, and in determination block 1306, the advertising server or other control computing device may determine whether the spacing, density and/or location thresholds are satisfied. If the MADDs are distributed well enough to satisfy the spacing, density and/or location thresholds (i.e., determination block 1306 = Yes), then no actions need to be taken. If the MADDs are not distributed well enough to satisfy the spacing, density and/or location thresholds (i.e., determination block 1306 = No), then in block 1308 new positions for the MADDs may be determined by using the algorithm to determine locations that will better satisfy advertiser preferences and requirements. Various optimization techniques may be used in the algorithm to determine new positions. For example, the server may repeatedly perturb the current positions by issuing driving instructions and reiterating the algorithm, such as in simulated annealing or genetic algorithms. The number of iterations may vary between aspects as well.

New positions may be transmitted to the plurality of MADDs in block 1310. These positions may be transmitted as suggestions, as orders depending on the context, or as offers to be paid more for operating the MADD in particular advertising zones. For example, a taxicab driver may be paid for advertisements displayed on a MADD mounted on his taxi in a first area. The taxi driver may receive a new position indicating that he will be paid more for driving in a second area. Although a taxi driver may be more interested in fares, if the taxi driver believes he will earn the same fair in either area, he is likely drive to the second area to earn more from displaying advertisements.

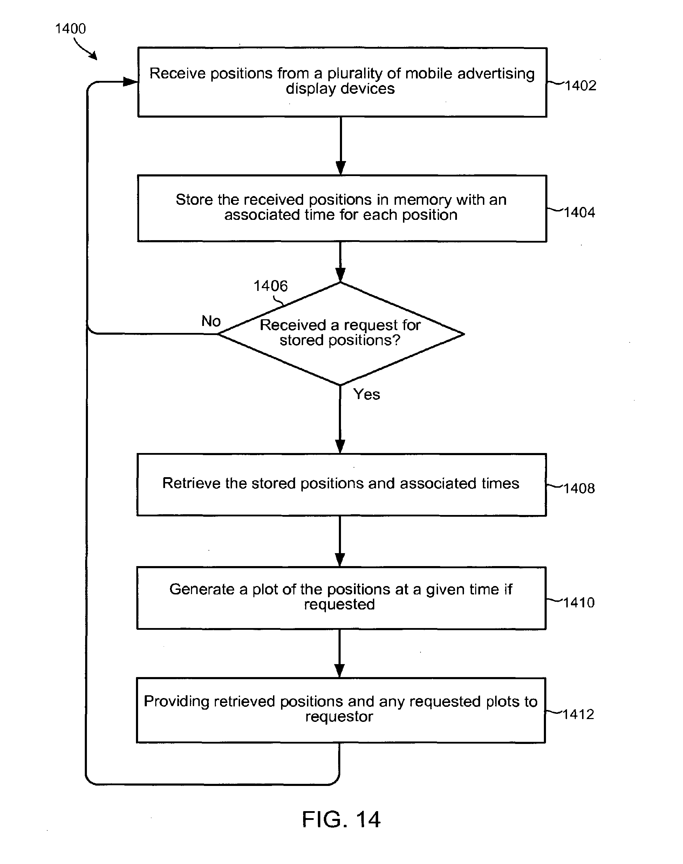

FIG. 14 illustrates an aspect method 1400 that may be implemented in a server for providing positioning records of MADDs 108. Positions from a plurality of MADDs 108 may be received in block 1402. The received positions may be stored in a memory in block 1404. These positions may be associated with the time of each position in various types of data structures.

An advertiser or a business considering how to place advertisements may request the stored position data. If a request for the stored positions is not received (i.e., determination block 1406 = No), then the server may continue to gather position data. If a request for the stored positions is received (i.e., determination block 1406 = Yes), then the stored positions may be retrieved in block 1408. The times associated with each position may also be retrieved. If the request included a request for a plot of the positions, a plot may be generated in block 1410. The plot may be based on the positions as they relate to the associated times. The retrieved positions and any requested plots may be provided to the requester in block 1412.

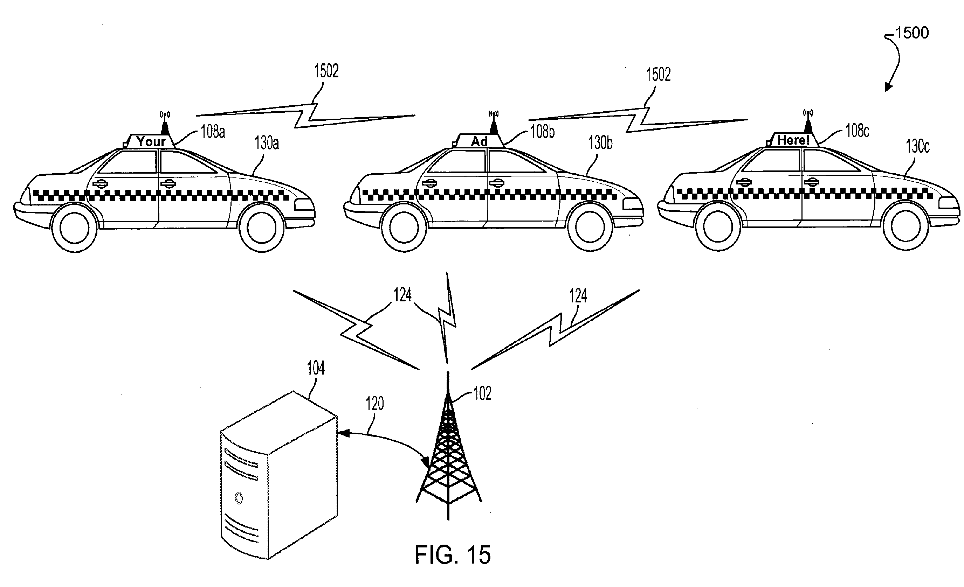

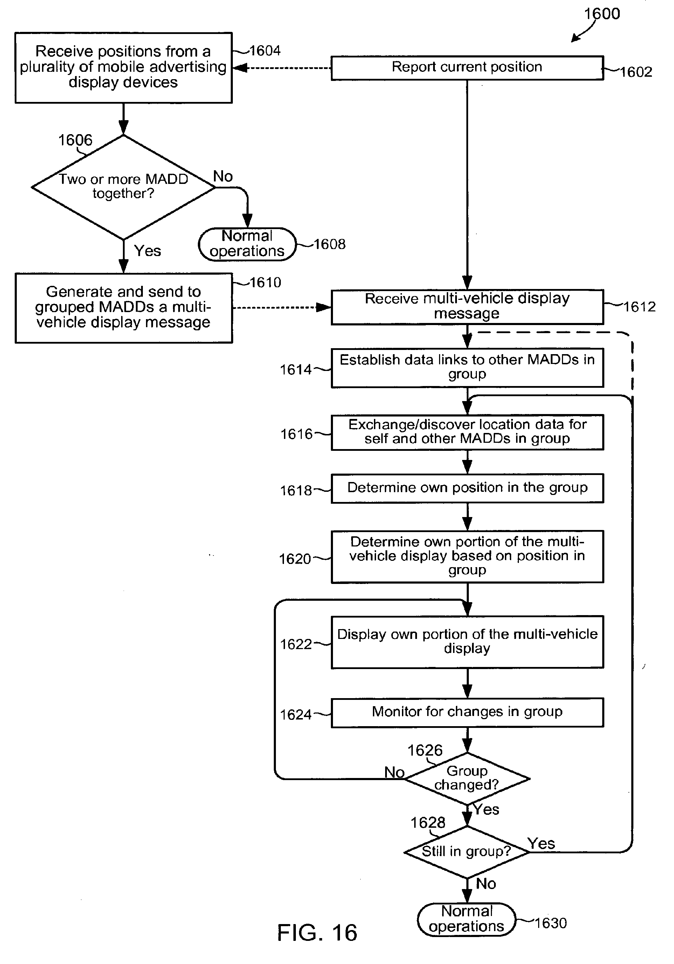

In a further aspect illustrated in FIGs. 15 and 16, a number of MADD display units positioned in close proximity to one another may cooperate in order to present a multi-vehicle display. Such an embodiment may be useful in a number of situations in which commercial vehicles may assemble, such as taxi stands, bus loading zones, truck stops, etc. In such situations, multiple MADD displays may be lined up so that their various displays may be used in combination. A series of MADD displays may be used to form one long advertisement or a moving advertisement that jumps from one vehicle/display to the next. For example, a line of taxi cabs equipped with MADD displays lined up at an airport or in front of a hotel may be used to generate an advertisement that is larger than any single display by itself. As another example, an advertisement presented on a single MADD display may appear to jump from one vehicle to the next. In a further example, a single advertisement may be caused to appear momentarily on vehicle MADD displays as a line of the vehicles passes by a given location. As a further example, the presentations on multiple MADD displays may be synchronized to generate a mural-like display, which may be animated, in order to highlight an event or attract attention.

FIG. 15 illustrates a communication system 1500 made up of three vehicles 130a, 130b, 130c equipped with MADD displays 108a, 108b, 108c and in communication with an advertising server 104 via a wireless communication system 102. As discussed above, each MADD display 108a, 108b, 108c may transmit its location to and received advertising display messages from the advertising server 104 via wireless data links 124. When the advertising server and/or the MADD displays 108a, 108b, 108c recognize that a minimum number of MADD displays (e.g., two or more) are within a threshold proximity to one another, the MADD displays 108a, 108b, 108c may also communicate with each other through wireless data links 1502 in order to exchange location data and coordinate a multi-vehicle advertising display. The MADD displays 108a, 108b, 108c may exchange their own locations as well as the locations of other MADD displays around them via the display-to-display wireless data links 1502. The MADD displays 108a, 108b, 108c may also exchange display information enabling the displays to coordinate among themselves the words and images to appear on each respective MADD display. Through such coordination and software functioning within the MADD display unit processors, each MADD display unit 108a, 108b, 108c may determine its relative position within a group of MADD displays and the portion of the multi-vehicle advertisement display that it should present.

FIG. 16 illustrates an aspect method 1600 for generating multi-vehicle displays that may be implemented using the communication system 1500 illustrated in FIG. 15. In method 1600 in step 1602, each MADD display may determine and report its current position to the advertising server in block 1602. In block 1604, the advertising server may receive the position reports from the plurality of MADD displays, and in determination block 1606, determine whether there a sufficient number of MADD displays are located in proximity to one another to support a multi-vehicle display. The minimum number of MADD displays for a multi-vehicle display may vary depending upon the display as well as the size of the MADD displays in the group. If the advertising server determines that a sufficient number of MADD displays are close together in a given location (i.e., determination block 1606 = "No"), the advertising server may continue with normal operations in block 1608 as described above. If the advertising server determines that a sufficient number of MADD displays are assembled in a given location (i.e., determination block 1606 = "Yes"), the server may generate and send to the group of gathered MADD displays a multi-vehicle display message in block 1610.

Such a multi-vehicle display message generated and transmitted in block 1610 may provide the MADD displays within an identified group with the information each display unit needs in order to determine and render its respective portion of the multi-vehicle display. Such information may include the entire set of images and text to appear on all vehicles, breakdowns of the multi-vehicle display to appear on individual displays, and identifiers of all the members of the group (i.e., the MADD displays determined by the server to be in close proximity). The multi-vehicle display message may also include further information regarding the timing for displaying particular portions of the multi-vehicle display, such as to enable synchronizing of a complex animated display. The multi-vehicle display message may further include specific information intended for a particular MADD display, such as the specific images that each is to render at specific times. The more specific the instructions provided by the advertising server, the less processing and cooperation that the various MADD display units may have to perform. For example, if the server is able to determine from received position reports the specific location of each MADD display within a sequence of displays, the server can specify to each display the images and/or text should be presented so that the overall multi-vehicle display appears as desired. However, if position reports received from some of the MADD displays have large errors (e.g., the position reports are not based on accurate GPS fixes), the server may leave the process of determining the relative position within the group and the specific portion of the multi-vehicle display to appear on each MADD display to the display processors. Thus, the information included within a multi-vehicle display message may depend upon the circumstances, as well as the display content and number of involved vehicles.

Each of the MADD displays identified within a group to render a multi-vehicle display may receive the message from the server in block 1612. In block 1614, the MADD display units within the group may establish wireless data links with one another in block 1614. Such wireless data links may be accomplished through any of the wireless communication systems available to the display units, including cellular data links (e.g., using IP addressing and Internet protocol communications), Wi-Fi links, Bluetooth® links, ad hoc wireless data links (e.g., ZigBee® data links), etc. In an aspect, display unit-to-display unit wireless data links may also be established through the wireless communication system to the advertising server, which may serve as a router for such inter-display unit communications. In block 1616, the MADD display units within the group may exchange their respective location data with each other so that each unit can determine its own position within a line or location within the group in block 1618. Alternatively or in addition, the MADD display units may use the wireless communications to discover the relative location of each other display unit within the group in block 1616, such as by using signal strength to estimate separation distances.

In block 1620, each MADD display unit may determine the portion of the multi-vehicle display that each should present based upon its determined position or location within the group. Since a MADD display may have two sides, such as when the display is positioned on the top of the vehicle, in block 1620 each MADD display unit may determine its position within a line of displays for each side of the display. Thus, if a message is to be presented as a sequence of images and/or words stretching along a line of displays, the portion of the overall image that appears on any one display is likely to be different on its two sides (except for the MADD display in the middle of such a sequence).

In block 1622 each MADD display may render its portion (or portions when the display has two sides) of the multi-vehicle display. In block 1624, each MADD display unit may monitor its own position and group communications for changes in the membership or relative positions of displays within the group. For example, each MADD display unit may determine whether it has moved (e.g., change GPS coordinates) which may impact the group membership (e.g., if the display leaves the vicinity of the other members of the group) and/or relative position of the display unit within the group. Also, the group MADD display units may continue to exchange position information with each other and with the server, and each display unit may monitor such communications to determine when the group membership and/or geographic positions change. In determination block 1626, each MADD display unit may detect when a change to the group occurs. So long as no changes to the group occur (i.e., determination block 1626 = "No"), the unit may continue to display its own portion of the multi-vehicle display in block 1622. When a change to the group is detected (i.e., determination block 1626 = "Yes"), the display unit may determine whether it remains within the group in determination block 1628. If the display unit determines that it has left the group or the group has disassembled (i.e., determination block 1628 = "No"), the display unit may return to normal operations in block 1630, such as generating a single vehicle display for the various aspects described above. If the display unit determines that it is still a member of the group but the group has changed (i.e., determination block 1628 = "Yes"), the display unit may return to block 1616 to exchange or discover the locations of other members of the group in order to determine its new relative position in the group in block 1618, and determine its own portion of the multi-vehicle display to be rendered in block 1620. If a new MADD display unit joins the group, each display unit may return to block 1614 in order to establish wireless data links with the new members of the group.

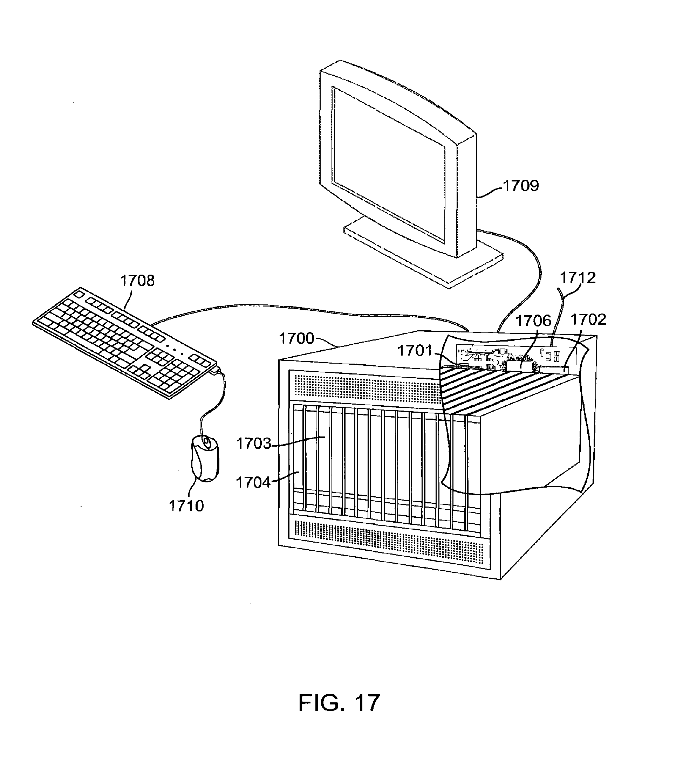

Various aspects may be implemented on any of a variety of commercially available server devices, such as the server 1700 illustrated in FIG. 17. Such a server 1700 typically includes a processor 1701 coupled to volatile memory 1702 and a large capacity nonvolatile memory, such as a disk drive 1703. The server 1700 may also include a floppy disc drive, compact disc (CD) or DVD disc drive 1704 coupled to the processor 1701. The server 1700 may also include network access ports 1706 coupled to the processor 1701 for establishing data connections with a network 1712, such as a local area network coupled to other broadcast system computers and servers. Servers 1700 may also include operator interfaces, such as a keyboard 1708, pointer device (e.g., a computer mouse 1710), and a display 1709.

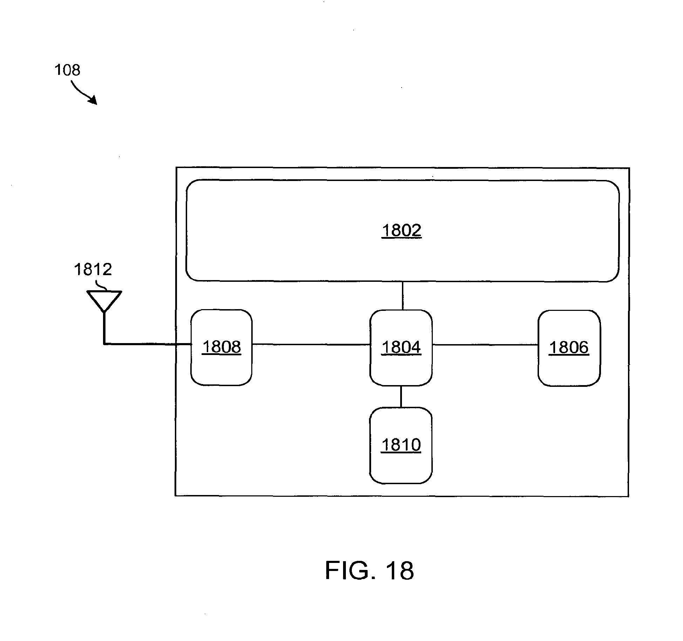

FIG. 18 illustrates some of the components of an exemplary MADD 108. The MADD 108 may include a large digitally controlled advertisement display 1802. The display 1802 may be any of a variety of display types, such as light emitting diode displays, liquid crystal displays, electroluminescent displays, and interferometric modulator displays. The display 1802 may be connected to a processor 1804 which is configured to provide the images presented on the display. The processor 1804 may also be coupled to a memory 1810, a GPS device 1806 for determining location, and a wireless communication transceiver 1808 with an antenna 1812. The processor 1804 may be configured with processor-executable instructions to perform the operations of the various aspect methods.

FIG. 19 illustrates an example of a MADD 108 in use. In this example, the MADD is on top of a taxi 130, but various other vehicles may be used. The MADD 108 may include the antenna 1812 and a structure 1902 which may contain the processor 1804 and other components described above with reference to FIG. 18.

The foregoing method descriptions and the process flow diagrams are provided merely as illustrative examples and are not intended to require or imply that the operations or steps of the various aspects must be performed in the order presented. As will be appreciated by one of skill in the art the order of blocks in the foregoing aspects may be performed in any order. Words such as "thereafter," "then," "next," etc. are not intended to limit the order of the operations or steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. The aspect methods described herein may be implemented in a computing device by configuring a processor of the computing device with processor-executable instructions to perform the operations of the method. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the operations and functions described may be implemented in hardware, software, firmware, or any combination thereof. If implemented in software, the functions may be stored on a computer-readable medium. The operations of a method or algorithm disclosed herein may be embodied in a processor-executable software module, which maybe stored on a non-transitory computer-readable medium or processor-readable medium. Non-transitory computer-readable and processor-readable media may be any available storage media that may be accessed by a computer or processor. By way of example, and not limitation, such non-transitory computer-readable media may include RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed aspects is provided to enable any person skilled in the art to make or use the present invention. Various modifications to these aspects will be readily apparent to those skilled in the art.

## Claims

1. A method for displaying advertisements on a mobile device, comprising:
receiving a plurality of advertisements and advertisement selection criteria associating the plurality of advertisements with regions and times (652, 754); and
determining a current position and a current time (756); the method **characterized by**:
receiving user data from at least one mobile device, the user data including a user request (772);
responding to the user request (774);
selecting an advertisement from the plurality of advertisements based on the current position, the current time, and the user data (758); and
displaying the selected advertisement (664).

2. The method of claim 1, further **characterized by**:
establishing wireless communication links with a plurality of mobile devices including the at least one mobile device, wherein the advertisement selection criteria further associates the plurality of advertisements with the user data, and wherein the advertisement is also selected based on the advertisement selection criteria.

3. The method of claim 1, further **characterized by**:
transmitting the current position to an advertising server;
determining whether the advertisement was received;
displaying the advertisement if the advertisement was received;
determining if an instruction was received if the advertisement was not received;
displaying the advertisement according to the instruction if the instruction was received; and
displaying a default advertisement if the instruction was not received and the advertisement was not received.

4. The method of claim 1, further **characterized by**:
establishing wireless communication links with a plurality of mobile devices including the at least one mobile device; and
transmitting received user data to the advertising server.

5. The method of claim 1, further **characterized by**:
generating an invoice, wherein the invoice charges a first amount to a first account associated with the advertisement.

6. The method of claim 5, further **characterized by**:
establishing wireless communication links with a plurality of mobile devices including the at least one mobile device; and
transmitting the user data to the advertising server;
wherein the invoice further charges a second amount to a second account associated with the advertisement based on the at least one mobile device.

7. The method of claim 6, wherein the invoice further charges a third amount to a third account associated with the advertisement if in response to the user data including the user request.

8. A method of selecting advertisements to display on a mobile advertising display device, comprising:
receiving a plurality of advertisements (652);
associating each of the plurality of advertisements with a region or time into advertisement selection criteria (754);
receiving a position from the mobile advertising display device (756); the method **characterized by**:
receiving user data from at least one mobile device, the user data including a user request (772);
responding to the user request (774);
selecting an advertisement from the plurality of advertisements based on the position, the current time, the user data and the advertisement selection criteria (758);
determining if the advertisement is stored on the mobile advertising display device (660);
transmitting the advertisement to the mobile advertising display device if the selected advertisement is not stored on the mobile advertising display device (662); and
transmitting to the mobile advertising display device an instruction to display the advertisement if the advertisement is stored on the mobile advertising display device (664).

9. The method of claim 8, wherein each of the plurality of advertisements is associated with sample user data in the advertisement selection criteria.

10. The method of claim 9, further **characterized by**:
receiving a second plurality of advertisements;
associating each of the second plurality of advertisements with a region, a time, and sample user data; and
updating the data structure with the second plurality of advertisements and associated region, time, and sample user data.

11. The method of claim 8, further **characterized by**:
crediting a first account associated with the selected advertisement by a first amount; and
debiting a second account associated with the selected advertisement by the first amount.

12. The method of claim 11, further **characterized by**:
associating each of the plurality of advertisements with the user data;
receiving further user data from the mobile device;
crediting a first account associated with the selected advertisement by a second amount based on the further user data; and
debiting a second account associated with the selected advertisement by the second amount.

13. The method of claim 12, further **characterized by**:
crediting a first account associated with the advertisement by a third amount based on the user request; and
debiting a second account associated with the advertisement by the third amount.

14. The method of claim 13, further **characterized by**:
receiving customer confirmations;
crediting the first account associated with the advertisement by a fourth amount based on the customer confirmations; and
debiting the second account associated with the advertisement by the fourth amount.

15. A mobile device, comprising:
means for receiving a plurality of advertisements and advertisement selection criteria associating the plurality of advertisements with regions and times (1812, 1808, 1804); and
means for determining a current position and a current time (1804, 1806, 1810); the mobile device **characterized by**:
means for receiving user data from at least one mobile device, the user data including a user request (1812, 1808, 1804);
means for responding to the user request (1804);
means for selecting an advertisement from the plurality of advertisements based on the current position, the current time, and the user data (1804); and
means for displaying the selected advertisement (1802).

16. A non-transitory processor readable storage medium having stored thereon processor executable instructions configured to cause a processor of a mobile device to perform any one of the methods of claims 1-14.

17. A server, comprising:
means for receiving a plurality of advertisements (1701, 1702);
means for associating each of the plurality of advertisements with a region or time into advertisement selection criteria (1701, 1702); and
means for receiving a position from a mobile advertising display device (1706, 1712); the server **characterized by**:
means for receiving user data from at least one mobile device, the user data including a user request (1706, 1712);
means for responding to the user request (1701, 1702, 1706, 1712);
means for selecting an advertisement from the plurality of advertisements based on the position, the current time, the user data and the advertisement selection criteria (1701, 1702);
means for determining if the advertisement is stored on the mobile advertising display device (1701, 1702);
means for transmitting the advertisement to the mobile advertising display device if the selected advertisement is not stored on the mobile advertising display device (1701, 1702, 1706, 1712); and
means for transmitting to the mobile advertising display device an instruction to display the advertisement if the advertisement is stored on the mobile advertising display device (1701, 1702, 1706, 1712).

## Patentansprüche

1. Ein Verfahren zum Anzeigen von Werbung auf einem Mobilgerät, aufweisend:
Empfangen einer Vielzahl von Werbungen und Werbungsauswahlkriterien, die die Vielzahl von Werbungen mit Regionen und Zeiten assoziieren (652, 754), und
Bestimmen der aktuellen Position und der aktuellen Zeit (756),
wobei das Verfahren **gekennzeichnet ist durch**:
Empfangen von Benutzerdaten von wenigstens einem Mobilgerät, wobei die Benutzerdaten eine Benutzeranfrage enthalten (772),
Antworten auf die Benutzeranfrage (774),
Auswählen einer Werbung aus der Vielzahl von Werbungen basierend auf der aktuellen Position, der aktuellen Zeit und den Benutzerdaten (758), und
Anzeigen der ausgewählten Werbung (664).

2. Verfahren nach Anspruch 1, das weiterhin **gekennzeichnet ist durch**:
Herstellen von drahtlosen Kommunikationsverbindungen mit einer Vielzahl von Mobilgeräten einschließlich des wenigstens einen Mobilgeräts, wobei die Werbungsauswahlkriterien die Vielzahl von Werbungen weiterhin mit den Benutzerdaten assoziieren und wobei die Werbung auch basierend auf den Werbungsauswahlkriterien ausgewählt wird.

3. Verfahren nach Anspruch 1, das weiterhin **gekennzeichnet ist durch**:
Senden der aktuellen Position an weinen Werbungsserver,
Bestimmen, ob die Werbung empfangen wurde,
Anzeigen der Werbung, wenn die Werbung empfangen wurde, Bestimmen, ob ein Befehl empfangen wurde, wenn die Werbung nicht empfangen wurde,
Anzeigen der Werbung gemäß dem Befehl, wenn der Befehl empfangen wurde, und
Anzeigen einer Standardwerbung, wenn der Befehl nicht empfangen wurde und die Werbung nicht empfangen wurde.

4. Verfahren nach Anspruch 1, weiterhin **gekennzeichnet durch**:
Herstellen von drahtlosen Kommunikationsverbindungen mit einer Vielzahl von Mobilgeräten einschließlich des wenigstens einen Mobilgeräts, und
Senden der empfangenen Benutzerdaten an den Werbungsserver.

5. Verfahren nach Anspruch 1, das weiterhin **gekennzeichnet ist durch**:
Erzeugen einer Rechnung, wobei die Rechnung ein mit der Werbung assoziiertes erstes Konto mit einem ersten Betrag belastet.

6. Verfahren nach Anspruch 5, das weiterhin **gekennzeichnet ist durch**:
Herstellen von drahtlosen Kommunikationsverbindungen mit einer Vielzahl von Mobilgeräten einschließlich des wenigstens einen Mobilgeräts, und
Senden der Benutzerdaten an den Werbungsserver,
wobei die Rechnung weiterhin ein mit der Werbung assoziiertes zweites Konto mit einem zweien Betrag basierend auf dem wenigstens einen Mobilgerät belastet.

7. Verfahren nach Anspruch 6, wobei die Rechnung weiterhin ein mit der Werbung assoziiertes drittes Konto mit einem dritten Betrag in Antwort auf die Benutzerdaten mit der darin enthaltenen Benutzeranfrage belastet.

8. Ein Verfahren zum Auswählen von Werbung für die Anzeige auf einem mobilen Werbungsanzeigegerät, umfassend:
Empfangen einer Vielzahl von Werbungen (652),
Assoziieren jeder aus der Vielzahl von Werbungen mit einer Region oder einer Zeit in Werbungsauswahlkriterien (754), und
Empfangen einer Position von dem mobilen Werbungsanzeigegerät (756),
wobei das Verfahren **gekennzeichnet ist durch**:
Empfangen von Benutzerdaten von wenigstens einem Mobilgerät, wobei die Benutzerdaten eine Benutzeranfrage enthalten (772),
Antworten auf die Benutzeranfrage (774),
Auswählen einer Werbung aus der Vielzahl von Werbungen basierend auf der Position, der aktuellen Zeit, den Benutzerdaten und den Werbungsauswahlkriterien (758),
Bestimmen, ob die Werbung in dem mobilen Werbungsanzeigegerät gespeichert ist (660),
Senden der Werbung an das mobile Werbungsanzeigegerät, wenn die ausgewählte Werbung nicht in dem mobilen Werbungsanzeigegerät gespeichert ist (662), und
Senden, an das mobile Werbungsanzeigegerät, eines Befehls zum Anzeigen der Werbung, wenn die Werbung in dem mobilen Werbungsanzeigegerät gespeichert ist (664).

9. Verfahren nach Anspruch 8, wobei jede aus der Vielzahl von Werbungen mit Probebenutzerdaten in den Werbungsauswahlkriterien assoziiert ist.

10. Verfahren nach Anspruch 9, das weiterhin **gekennzeichnet ist durch**:
Empfangen einer zweiten Vielzahl von Werbungen,
Assoziieren jeder aus der zweiten Vielzahl von Werbungen mit einer Region, einer Zeit und Probebenutzerdaten, und
Aktualisieren der Datenstruktur mit der zweiten Vielzahl von Werbungen und der Region, der Zeit und den Probebenutzerdaten, die damit assoziiert sind.

11. Verfahren nach Anspruch 8, das weiterhin **gekennzeichnet ist durch**:
Gutschreiben eines ersten Betrags auf ein mit der ausgewählten Werbung assoziiertes erstes Konto, und
Belasten eines mit der ausgewählten Werbung assoziierten zweiten Kontos mit dem ersten Betrag.

12. Verfahren nach Anspruch 11, das weiterhin **gekennzeichnet ist durch**:
Assoziieren jeder aus der Vielzahl von Werbungen mit den Benutzerdaten,
Empfangen weiterer Benutzerdaten von dem Mobilgerät,
Gutschreiben eines zweiten Betrags auf ein mit der ausgewählten Werbung assoziiertes erstes Konto basierend auf den weiteren Benutzerdaten, und
Belasten eines mit der ausgewählten Werbung assoziierten zweiten Kontos mit dem zweiten Betrag.

13. Verfahren nach Anspruch 12, das weiterhin **gekennzeichnet ist durch**:
Gutschreiben eines dritten Betrags auf ein mit der ausgewählten Werbung assoziiertes erstes Konto basierend auf der Benutzeranfrage, und
Belasten eines mit der ausgewählten Werbung assoziierten zweiten Kontos mit dem dritten Betrag.

14. Verfahren nach Anspruch 13, das weiterhin **gekennzeichnet ist durch**:
Empfangen von Benutzerbestätigungen,
Gutschreiben eines vierten Betrags auf ein mit der ausgewählten Werbung assoziiertes erstes Konto basierend auf den Benutzerbestätigungen, und
Belasten eines mit der ausgewählten Werbung assoziierten zweiten Kontos mit dem vierten Betrag.

15. Ein Mobilgerät, das umfasst:
Mittel zum Empfangen einer Vielzahl von Werbungen und Werbungsauswahlkriterien, die die Vielzahl von Werbungen mit Regionen und Zeiten assoziieren (1812, 1808, 1804), und
Mittel zum Bestimmen der aktuellen Position und der aktuellen Zeit (1804, 1806, 1810),
wobei das Mobilgerät **gekennzeichnet ist durch**:
Mittel zum Empfangen von Benutzerdaten von wenigstens einem Mobilgerät, wobei die Benutzerdaten eine Benutzeranfrage enthalten (1812, 1808, 1804),
Mittel zum Antworten auf die Benutzeranfrage (1804),
Mittel zum Auswählen einer Werbung aus der Vielzahl von Werbungen basierend auf der aktuellen Position, der aktuellen Zeit und den Benutzerdaten (1804), und
Mittel zum Anzeigen der ausgewählten Werbung (1802).

16. Ein nicht-transitorisches, prozessorlesbares Speichermedium mit darauf gespeicherten prozessorausführbaren Befehlen, die konfiguriert sind, um einen Prozessor eines Mobilgeräts zum Durchführen eines der Verfahren der Ansprüche 1-14 zu veranlassen.

17. Ein Server, der umfasst:
Mittel zum Empfangen einer Vielzahl von Werbungen (1701, 1702),
Mittel zum Assoziieren jeder aus der Vielzahl von Werbungen mit einer Region oder Zeit in Werbungsauswahlkriterien (1701, 1702), und
Mittel zum Empfangen einer Position von einem mobilen Werbungsanzeigegerät (1706, 1712),
wobei der Server **gekennzeichnet ist durch**:
Mittel zum Empfangen von Benutzerdaten von wenigstens einem Mobilgerät, wobei die Benutzerdaten eine Benutzeranfrage enthalten (1706, 1712),
Mittel zum Antworten auf die Benutzeranfrage (1701, 1702, 1706, 1712),
Mittel zum Auswählen einer Werbung aus der Vielzahl von Werbungen basierend auf der Position, der aktuellen Zeit, den Benutzerdaten und den Werbungsauswahlkriterien (1701, 1702),
Mittel zum Bestimmen, ob die Werbung in dem mobilen Werbungsanzeigegerät gespeichert ist (1701, 1702),
Mittel zum Senden der Werbung an das mobile Werbungsanzeigegerät, wenn die ausgewählte Werbung nicht in dem mobilen Werbungsanzeigegerät gespeichert ist (1701, 1702, 1706, 1712), und
Mittel zum Senden, an das mobile Werbungsanzeigegerät, eines Befehls zum Anzeigen der Werbung, wenn die Werbung in dem mobilen Werbungsanzeigegerät gespeichert ist (1701, 1702, 1706, 1712).

## Revendications

1. Procédé d'affichage de publicités sur un dispositif mobile, comprenant :
la réception d'une pluralité de publicités et de critères de sélection de publicité associant la pluralité de publicités à des régions et des heures (652, 754) ; et
la détermination d'une position courante et d'une heure courante (756) ; le procédé étant **caractérisé par** :
la réception de données utilisateur en provenance d'au moins un dispositif mobile, les données utilisateur comprenant une requête utilisateur (772) ;
la réponse à la requête utilisateur (774) ;
la sélection d'une publicité parmi la pluralité de publicités sur la base de la position courante, de l'heure courante et des données utilisateur (758) ; et
l'affichage de la publicité sélectionnée (664).

2. Procédé selon la revendication 1, **caractérisé en outre par** :
l'établissement de liaisons de communication sans fil avec une pluralité de dispositifs mobiles y compris l'au moins un dispositif mobile, dans lequel les critères de sélection de publicité associent en outre la pluralité de publicités aux données utilisateur, et dans lequel la publicité est également sélectionnée sur la base des critères de sélection de publicité.

3. Procédé selon la revendication 1, **caractérisé en outre par** :
l'envoi de la position courante à un serveur publicitaire ;
la détermination du fait que la publicité a été reçue ou non ;
l'affichage de la publicité si la publicité a été reçue ;
la détermination du fait qu'une instruction a été reçue ou non si la publicité n'a pas été reçue ;
l'affichage de la publicité conformément à l'instruction si l'instruction a été reçue ; et
l'affichage d'une publicité par défaut si l'instruction n'a pas été reçue et la publicité n'a pas été reçue.

4. Procédé selon la revendication 1, **caractérisé en outre par** :
l'établissement de liaisons de communication sans fil avec une pluralité de dispositifs mobile y compris l'au moins un dispositif mobile ; et
l'envoi de données utilisateur reçues au serveur publicitaire.

5. Procédé selon la revendication 1, **caractérisé en outre par** :
la génération d'une facture, la facture imputant un premier montant à un premier compte associé à la publicité.

6. Procédé selon la revendication 5, **caractérisé en outre par** :
l'établissement de liaisons de communication sans fil avec une pluralité de dispositifs mobile y compris l'au moins un dispositif mobile ; et
l'envoi des données utilisateur au serveur publicitaire ;
dans lequel la facture impute en outre un deuxième montant à un deuxième compte associé à la publicité sur la base de l'au moins un dispositif mobile.

7. Procédé selon la revendication 6, dans lequel la facture impute en outre un troisième montant à un troisième compte associé à la publicité si elle est en réponse aux données utilisateur comprenant la requête utilisateur.

8. Procédé de sélection de publicités à afficher sur un dispositif d'affichage publicitaire mobile, comprenant :
la réception d'une pluralité de publicités (652) ;
l'association de chaque publicité de la pluralité de publicité à une région en une heure afin d'obtenir des critères de sélection de publicité (754) ;
la réception d'une position en provenance du dispositif d'affichage publicitaire mobile (756) ; le procédé étant **caractérisé par** :
la réception de données utilisateur en provenance d'au moins un dispositif mobile, les données utilisateur comprenant une requête utilisateur (772) ;
la réponse à la requête utilisateur (774) ;
la sélection d'une publicité parmi la pluralité de publicités sur la base de la position, de l'heure courante, des données utilisateur et des critères de sélection de publicité (758) ;
la détermination du fait que la publicité est stockée ou non sur le dispositif d'affichage publicitaire mobile (660) ;
l'envoi de la publicité au dispositif d'affichage publicitaire mobile si la publicité sélectionnée n'est pas stockée sur le dispositif d'affichage publicitaire mobile (662) ; et
l'envoi, au dispositif d'affichage publicitaire mobile, d'une instruction d'affichage de la publicité si la publicité est stockée sur le dispositif d'affichage publicitaire mobile (664).

9. Procédé selon la revendication 8, dans lequel chaque publicité de la pluralité de publicités est associée à un échantillon de données utilisateur dans les critères de sélection de publicité.

10. Procédé selon la revendication 9, **caractérisé en outre par** :
la réception d'une deuxième pluralité de publicités ;
l'association de chaque publicité de la deuxième pluralité de publicités à une région, une heure et un échantillon de données utilisateur ; et
la mise à jour de la structure de données avec la deuxième pluralité de publicités et la région, l'heure et l'échantillon de données utilisateur associés.

11. Procédé selon la revendication 8, **caractérisé en outre par** :
le crédit d'un premier compte associé à la publicité sélectionnée d'un premier montant ; et
le débit d'un deuxième compte associé à la publicité sélectionnée du premier montant.

12. Procédé selon la revendication 11, **caractérisé en outre par** :
l'association de chaque publicité de la pluralité de publicités aux données utilisateur ;
la réception de données utilisateur supplémentaires en provenance du dispositif mobile ;
le crédit d'un premier compte associé à la publicité sélectionnée d'un deuxième montant basé sur les données utilisateur supplémentaires ; et
le débit d'un deuxième compte associé à la publicité sélectionnée du deuxième montant.

13. Procédé selon la revendication 12, **caractérisé en outre par** :
le crédit d'un premier compte associé à la publicité d'un troisième montant basé sur la requête utilisateur ; et
le débit d'un deuxième compte associé à la publicité du troisième montant.

14. Procédé selon la revendication 13, **caractérisé en outre par** :
la réception de confirmations consommateur ;
le crédit du premier compte associé à la publicité d'un quatrième montant basé sur les confirmations consommateur ; et
le débit du deuxième compte associé à la publicité du quatrième montant.

15. Dispositif mobile, comprenant :
un moyen pour recevoir une pluralité de publicités et des critères de sélection de publicité associant la pluralité de publicité à des régions et des heures (1812, 1808, 1804) ; et
un moyen pour déterminer une position courante et une heure courante (1804, 1806, 1810) ; le dispositif mobile étant **caractérisé par** :
un moyen pour recevoir des données utilisateur en provenance d'au moins un dispositif mobile, les données utilisateur comprenant une requête utilisateur (1812, 1808, 1804) ;
un moyen pour répondre à la requête utilisateur (1804) ;
un moyen pour sélectionner une publicité parmi la pluralité de publicités sur la base de la position courante, de l'heure courante et des données utilisateur (1804) ; et
un moyen pour afficher la publicité sélectionnée (1802).

16. Support de stockage lisible par processeur non transitoire, sur lequel sont stockées des instructions exécutables par processeur configurées pour faire mettre en oeuvre, par un processeur d'un dispositif mobile, l'un quelconque des procédés des revendications 1-14.

17. Serveur, comprenant :
un moyen pour recevoir une pluralité de publicités (1701, 1702) ;
un moyen pour associer chaque publicité de la pluralité de publicités à une région ou un temps afin d'obtenir des critères de sélection de publicité (1701, 1702) ; et
un moyen pour recevoir une position en provenance d'un dispositif d'affichage publicitaire mobile (1706, 1712) ; le serveur étant **caractérisé par** :
un moyen pour recevoir des données utilisateur en provenance d'au moins un dispositif mobile, les données utilisateur comprenant une requête utilisateur (1706, 1712) ;
un moyen pour répondre à la requête utilisateur (1701, 1702, 1706, 1712) ;
un moyen pour sélectionner une publicité parmi la pluralité de publicités sur la base de la position courante, de l'heure courante, des données utilisateur et des critères de sélection de publicité (1701, 1702) ;
un moyen pour déterminer si la publicité est stockée sur le dispositif d'affichage publicitaire mobile (1701, 1702) ;
un moyen pour envoyer la publicité au dispositif d'affichage publicitaire mobile si la publicité sélectionnée n'est pas stockée sur le dispositif d'affichage publicitaire mobile (1701, 1702, 1706, 1712) ; et
un moyen pour envoyer au dispositif d'affichage publicitaire mobile une instruction d'affichage de la publicité si la publicité est stockée sur le dispositif d'affichage publicitaire mobile (1701, 1702, 1706, 1712).
